# EUROPEAN PATENT SPECIFICATION

(11) **EP 2 458 904 B1**
(45) Date of publication and mention of the grant of the patent: **04.09.2013**
(21) Application number: 12152192.6
(22) Date of filing: 23.01.2007
(51) Int. Cl.: H04W 4/16, H04W 48/18, H04W 88/06

(54) **Communication apparatus, communication system, communicating method and recording medium for call reception through a plurality of interfaces depending on communication contents**
Kommunikationsvorrichtung, Kommunikationssystem, Kommunikationsverfahren und Aufzeichnungsmedium für Rufannahme durch eine Vielzahl von Schnittstellen in Abhängigkeit von Kommunikationsinhalten
Appareil de communication, système de communication, procédé de communication et support d'enregistrement pour la réception d'appels par plusieurs interfaces en fonction du contenu de communication

(30) Priority: 14.09.2006 JP 2006249683
(43) Date of publication of application: 30.05.2012
(62) Divisional of application: 07101023.5
(73) Proprietor: Fujitsu Limited, Kawasaki-shi, Kanagawa 211-8588 (JP)
(72) Inventor: Sano, Shoichi, Kawasaki-shi, Kanagawa 211-8588 (JP)
(74) Representative: Wilding, Frances Ward

(56) References cited:
- EP-A2- 1 033 850
- WO-A2-02/093945
- JP-A- 2005 073 078
- US-A- 5 666 364
- US-A1- 2005 243 754
- US-A1- 2005 266 876

## Description

### BACKGROUND OF THE INVENTION

### 1. Field of the Invention

The present invention relates generally to communication control in accordance with communication contents of incoming calls, including interfaces corresponding to a plurality of networks such as an interface corresponding to WLAN (Wireless Local Area Network), an interface corresponding to a cellular network, etc., and, more particularly, to a communication apparatus, network apparatus, communication system, communicating method, communicating program, and recording medium that can perform complex call reception by setting communication conditions such as permitting and rejecting incoming calls for interfaces depending on communication contents such as voice calls and data calls.

### 2. Description of the Related Art

With regard to mobile communication such as mobile phones, standards include a cellular (cellular communication system) network, WLAN, etc.; the cellular network includes CDMA (Code Division Multiple Access)-2000, W-CDMA (Wideband Code Division Multiple Access) and GSM (Global System for Mobile Communications), for example; and the WLAN includes IEEE (Institute of Electrical and Electronic Engineers) 802.11g and WiMAX (Worldwide Interoperability for Microwave Access), for example. A line interface is needed for supporting each network and a communication terminal apparatus supporting both networks needs two line interfaces. That is, a communication terminal apparatus having the line interfaces corresponding to the networks will be referred to as a "dual terminal apparatus" for convenience.

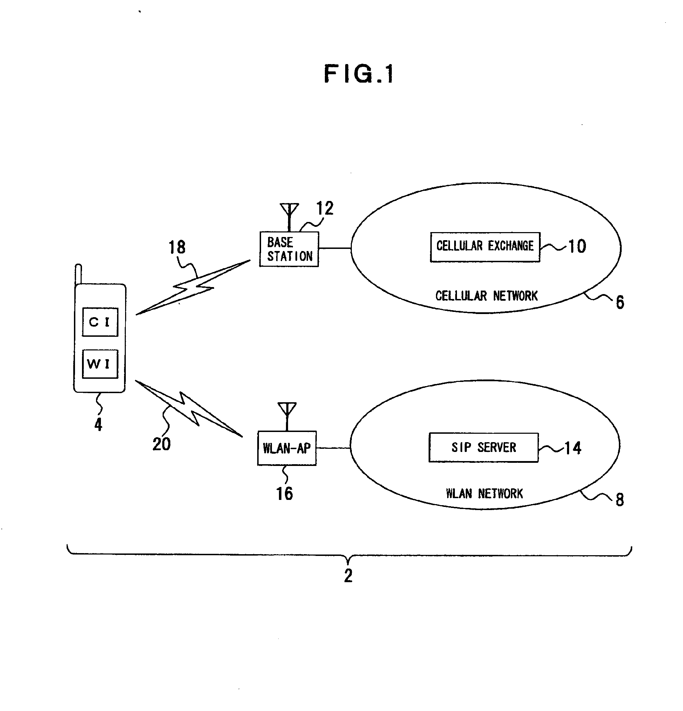

With regard to the mobile communication across a plurality of networks such as the cellular network and WLAN, Published Japanese Translation of PCT Application No. 2002-501353 discloses a communication system that communicates through land communication lines in the case of local calls and through a wireless access communication apparatus in the case of long-distance calls (paragraph No. 0022 and Fig. 1). Japanese Patent Application Laid-Open Publication No. 2005-33707 discloses a communication system that can receive information of an area where a communication terminal can ensure an excellent communication state and information of communication where the excellent communication state can be secured, among a plurality of connection forms, to select a connection form such as a fixed mode that enables communication only within a certain zone, a mobile mode that enables communication while moving, a portable terminal communication network, a PHS (Personal Handyphone System) communication network, and a cable communication network (abstract and Fig. 1). Published Japanese Translation of PCT Application No. 2005-531984 discloses that if a user device is idle for a wireless telephone network and active for WLAN, a portable telephone network can use the data signal connection between the WLAN and the portable telephone network to call the user device via the wireless channel of the WLAN and that if the user device is idle for the wireless telephone network and the WLAN, the WLAN and portable telephone network can use the data signal connection between the WLAN and the portable telephone network to call the user device, etc. (paragraph Nos. 0023 and 0034, Figs. 1, 4, and 7).

Although the communication system described in Published Japanese Translation of PCT Application No. 2002-501353 cancels registration of a subscriber identifier in an exchange if a wireless communication apparatus is powered off, since registration in the center also is deleted at the time of power-off, no call will be detoured through PSTN (Public Switched Telephone Network) and received by a private branch exchange. In Japanese Patent Application Laid-Open Publication No. 2005-33707, a terminal apparatus transmits a declaration signal indicating a connection form (mobile mode or fixed mode (WLAN or local mode such as cable)) and the network merely comprehends the network state to notify the terminal apparatus of the state. Published Japanese Translation of PCT Application No. 2005-531984 merely discloses automatic forwarding to an interface corresponding to the portable telephone network or WLAN, which is subjected to connection setting.

By the way, in a communication apparatus including a plurality of interfaces, energization of all the interfaces generates wasteful power consumption and has a great impact on battery life in the case of a battery-powered portable device. Although discontinuation of power supply to an inactive interface suppresses power consumption and contributes to increase in battery life in the case of a portable device, if power supply to the inactive interface is stopped, communication cannot be performed through the interface and a freedom degree of communication is deteriorated.

In the wireless communication, radio field intensity has an impact on communication quality and if radio field intensity is insufficient, communication cannot be performed. The communication apparatus including a plurality of interfaces corresponding to a plurality of networks such as the cellular network and WLAN can select a network depending on radio field intensity and is advantageous in that communication discontinuation due to decreased radio field intensity can be avoided.

Since a plurality of networks such as the cellular network and WLAN has different communication conditions such as usage charges and a user has a degree of freedom for selecting as needed, if the optimum interface is selected from a plurality of interfaces depending on the communication conditions, economical communication can be performed.

However, although one user is naturally restricted from using a plurality of interfaces at the same time even in the case of the communication apparatus including a plurality of interfaces that can support a plurality of networks such as the cellular network and WLAN, the communication apparatus can support received call contents including a voice phone call, given/received data such as e-mails, and other communications, and the communication contents are widely varied.

In such a communication environment, it is desirable to enhance the convenience such as effective utilization of the interfaces in the communication apparatus including a plurality of interfaces. Published Japanese Translation of PCT Application No. 2002-501353, Japanese Patent Application Laid-Open Publication No. 2005-33707, and Published Japanese Translation of PCT Application No. 2005-531984 do not disclose or indicate such problems and do not disclose or indicate means for solving the problems.

US2005/266876A1 discloses a method and apparatus for a handheld personal communications device capable of simultaneous wireless voice communications service and wireless data communications service. The invention includes providing wireless voice communications service to a first line of a handheld personal communications device and simultaneously providing wireless data communications service to a second line of the handheld personal communications device.

JP2005/073078 discloses a communication apparatus and communication method for realizing power consumption reduction in the communication apparatus which uses a plurality of different frequency bands to perform data communications. Wherein, when it is possible to receive signals using a second frequency band (e.g. a frequency band to be used in a wireless LAN), a communication apparatus comprising a multi-mode terminal transmits/receives signals using the second frequency and stops supplying power to a high frequency part and a signal processing part. When it is not possible to transmit/receive signals using the second frequency band, the communication apparatus transmits/receives signals using a first frequency band (e.g. a frequency band to be used for a cellular phone) and stops supplying power to a signal processing part of a second transmitting/receiving part.

US5666364A discloses an apparatus and associated method employing the concept of a central busy list for coordinating the receipt of incoming calls to a subscriber subscribing to the calling services of separate first and second communication networks. The central busy list apparatus cooperates with the networks to register a current call by a subscriber serviced by the first network, to receive a request for interruption of the call serviced by the first network to allow the subscriber to receive an incoming call to be serviced by the second network, to send a request to disconnect to the first network when a priority of the current call is lower than the priority of the incoming call, and to deny interruption of the current call by the incoming call when the priority of the current call is higher.

### SUMMARY OF THE INVENTION

The object of the present invention relates to a communication apparatus including a plurality of interfaces for supporting a plurality of networks and is to achieve complex call reception through a plurality of the interfaces by permitting or not permitting an incoming call for the interface depending on communication contents, such as voice calls and data calls such as e-mails.

To achieve the objects, the present invention relates to a communication apparatus wirelessly connected to a plurality of networks configured to enable call transmission/reception through the networks, comprising: first and second interface units corresponding to the networks; and characterized by: a controlling unit configured to, when a first call for another communication apparatus is requested from the first interface unit, request a network apparatus in the networks to set permission or non-permission depending on whether the first call is a voice call or a data call, and set permission or non-permission of a second incoming call for the second interface unit based on said setting depending on the voice call or the data call, the first call being either a voice call of a voice phone call or a data call of data communication and the second incoming call being either a voice call of a voice phone call or a data call of data communication, wherein the controlling unit is operable to request the network apparatus to set the permission or the non-permission of the second incoming call dependently on the voice call or the data call of the second incoming call while maintaining the voice phone call or the data communication that is established based on the first call.

To achieve the above objects, the present invention also relates to a communication system, a communicating method and a computer-readable recording medium storing a communicating program comprising code means adapted to perform the steps of a communicating method when executed on a computer, the communicating program being used for wirelessly connecting a plurality of networks with a communication apparatus to perform call transmission/reception between the communication apparatus and the networks, as defined in the attached claims.

An example relating to the invention includes a communication apparatus including a plurality of interface units corresponding to a plurality of networks and determines permission or non-permission of an incoming call depending on contents of communication between the networks and the interface units to enable concurrent use of a plurality of the interface units depending on communication contents. For example, during a phone call through one interface unit, when an incoming call exists for another interface unit, a process of permitting an incoming call can be performed if the communication contents of the incoming call are data, and a process of not permitting an incoming call can be performed if the communication contents are voices. By performing such processes, call reception can be performed depending on the communication contents to expand a communication range without preventing communication. Such processes may be performed by either the communication apparatus or the network.

In order to achieve the above object, according to a first example useful for understanding the present invention there is provided a communication apparatus wirelessly connected to a plurality of networks to enable call transmission/reception through the networks, comprising a plurality of interface units corresponding to the networks; and a controlling unit that performs control to permit or not permit the incoming call for the interface unit based on determination of communication contents between the network and the interface unit.

Preferably, in the communication apparatus, the controlling unit compares the communication contents of the communicating interface unit with communication contents of an incoming call for another interface unit and permits the incoming call for another interface unit if the communication contents are different. Preferably, in the communication apparatus, if the communication contents of the incoming call for another interface unit are a data call while the communicating interface unit performs a voice phone call, the controlling unit permits the incoming call of the data call. Preferably, in the communication apparatus, if the communication contents of the incoming call for another interface unit are a voice call while the communicating interface unit performs data communication, the controlling unit permits the incoming call of the voice call. Preferably, in the communication apparatus, if the communication contents of the incoming call for another interface unit are a voice call while the communicating interface unit performs a voice phone call, the controlling unit permits concurrent voice phone calls through a plurality of the interface units.

In order to achieve the above object, according to a second example useful for understanding the present invention there is provided a network apparatus wirelessly connected to a communication apparatus having a plurality of interface units to receive incoming calls for the interface units, comprising a setting unit that sets permission or non-permission of the incoming call for the interface unit depending on communication contents based on an instruction from the communication apparatus; and a controlling unit that compares communication contents of a communication destination with the setting contents of the setting unit, the controlling unit performing control to permit or not permit the incoming call for the interface unit.

Preferably, in the network apparatus, the controlling unit compares the communication contents of the communicating interface unit with communication contents of an incoming call for another interface unit and permits the incoming call for another interface unit if the communication contents are different. Preferably, in the network apparatus, if the communication contents of the incoming call for another interface unit are a data call while the communicating interface unit performs a voice phone call, the controlling unit permits the incoming call of the data call. Preferably, in the network apparatus, if the communication contents of the incoming call for another interface unit are a voice call while the communicating interface unit performs data communication, the controlling unit permits the incoming call of the voice call. Preferably, in the network apparatus, if the communication contents of the incoming call for another interface unit are a voice call while the communicating interface unit performs a voice phone call, the controlling unit permits concurrent voice phone calls through a plurality of the interface units.

In order to achieve the above object, according to a third example useful for understanding the present invention there is provided a communication system including a plurality of networks and a communication apparatus wirelessly connected to the networks to enable call transmission/reception through the networks, the communication apparatus having a plurality of interface units corresponding to the networks, the communication apparatus performing control to permit or not permit the incoming call for the interface unit based on determination of communication contents between the network and the interface unit.

Preferably, in the communication system, the communication apparatus compares the communication contents of the communicating interface unit with communication contents of an incoming call for another interface unit and permits the incoming call for another interface unit if the communication contents are different. Preferably, in the communication system, if the communication contents of the incoming call for another interface unit are a data call while the communicating interface unit performs a voice phone call, the communication apparatus permits the incoming call of the data call. Preferably, in the communication system, if the communication contents of the incoming call for another interface unit are a voice call while the communicating interface unit performs data communication, the communication apparatus permits the incoming call of the voice call. Preferably, in the communication system, if the communication contents of the incoming call for another interface unit are a voice call while the communicating interface unit performs a voice phone call, the communication apparatus permits concurrent voice phone calls through a plurality of the interface units.

In order to achieve the above object, according to a fourth example useful for understanding the present invention there is provided a communication system including a communication apparatus having a plurality of interface units and a network apparatus wirelessly connected to the communication apparatus to receive incoming calls for the interface units, the network apparatus having a setting unit that sets permission or non-permission of the incoming calls for the interface units depending on communication contents based on an instruction from the communication apparatus, the network apparatus comparing communication contents of a communication destination with the setting contents of the setting unit, the network apparatus performing control to permit or not permit the incoming call for the interface unit.

Preferably, in the communication system, the network apparatus compares the communication contents of the communicating interface unit with communication contents of an incoming call for another interface unit and permits the incoming call for another interface unit if the communication contents are different. Preferably, in the communication system, if the communication contents of the incoming call for another interface unit are a data call while the communicating interface unit performs a voice phone call, the network apparatus permits the incoming call of the data call. Preferably, in the communication system, if the communication contents of the incoming call for another interface unit are a voice call while the communicating interface unit performs data communication, the network apparatus permits the incoming call of the voice call. Preferably, in the communication system, if the communication contents of the incoming call for another interface unit are a voice call while the communicating interface unit performs a voice phone call, the network apparatus permits concurrent voice phone calls through a plurality of the interface units.

In order to achieve the above object, according to a fifth example useful for understanding the present invention there is provided a communicating method used for wirelessly connecting a plurality of networks with a communication apparatus to perform call transmission/reception between the communication apparatus and the networks, the method comprising the steps of wirelessly connecting the network with any one of a plurality of interface units included in the communication apparatus; and performing control to permit or not permit the incoming call for the interface unit based on determination of communication contents between the network and the interface unit.

In order to achieve the above object, according to a sixth example useful for understanding the present invention there is provided a communicating method used for wirelessly connecting a communication apparatus having a plurality of interface units with a network apparatus to perform call transmission/reception between the interface units and the network apparatus, the method comprising the steps of setting permission or non-permission of the incoming call for the interface unit depending on communication contents based on an instruction from the communication apparatus; and comparing communication contents of a communication destination with the setting contents setting the permission or non-permission, and performing control to permit or not permit the incoming call for the interface unit.

Preferably, in the communicating method, the communication contents of the communicating interface unit are compared with communication contents of an incoming call for another interface unit and the incoming call for another interface unit is permitted if the communication contents are different. Preferably, in the communicating method, if the communication contents of the incoming call for another interface unit are a data call while the communicating interface unit performs a voice phone call, the incoming call of the data call is permitted. Preferably, in the communicating method, if the communication contents of the incoming call for another interface unit are a voice call while the communicating interface unit performs data communication, the incoming call of the voice call is permitted. Preferably, in the communicating method, if the communication contents of the incoming call for another interface unit are a voice call while the communicating interface unit performs a voice phone call, concurrent voice phone calls through a plurality of the interface units are permitted.

In order to achieve the above object, according to a seventh example useful for understanding the present invention there is provided a communicating program used for wirelessly connecting a plurality of networks with a communication apparatus to perform call transmission/reception between the communication apparatus and the networks, the program being executed by a computer, the program comprising the steps of wirelessly connecting the network with any one of a plurality of interface units included in the communication apparatus; and performing control to permit or not permit the incoming call for the interface unit based on determination of communication contents between the network and the interface unit.

In order to achieve the above object, according to a eighth example useful for understanding the present invention there is provided a communicating program used for wirelessly connecting a communication apparatus having a plurality of interface units with a network apparatus to perform call transmission/reception between the interface units and the network apparatus, the program being executed by a computer, the program comprising the steps of setting permission or non-permission of the incoming call for the interface unit depending on communication contents based on an instruction from the communication apparatus; and comparing communication contents of a communication destination with the setting contents setting the permission or non-permission, and performing control to permit or not permit the incoming call for the interface unit.

In order to achieve the above object, according to a ninth example useful for understanding the present invention there is provided a computer-readable recording medium storing a communicating program used for wirelessly connecting a plurality of networks with a communication apparatus to perform call transmission/reception between the communication apparatus and the networks, the program comprising the steps of wirelessly connecting the network with any one of a plurality of interface units included in the communication apparatus; and performing control to permit or not permit the incoming call for the interface unit based on determination of communication contents between the network and the interface unit.

In order to achieve the above object, according to a tenth example useful for understanding the present invention there is provided a computer-readable recording medium storing a communicating program used for wirelessly connecting a communication apparatus having a plurality of interface units with a network apparatus to perform call transmission/reception between the interface units and the network apparatus, the program comprising the steps of setting permission or non-permission of the incoming call for the interface unit depending on communication contents based on an instruction from the communication apparatus; and comparing communication contents of a communication destination with the setting contents setting the permission or non-permission, and performing control to permit or not permit the incoming call for the interface unit.

The features and advantages of the present invention are listed as follows.
(1) A communication apparatus and a plurality of interface units are efficiently utilized and a communication range is expanded since each interface unit can be controlled to permit or not permit an incoming call depending on incoming call contents and the same or different communication contents can be received during the communication of certain communication contents.
(2) The convenience can be enhanced by enabling call reception during communication.
(3) An inactive interface unit can be efficiently utilized along with a communicating interface unit.

Other objects, features, and advantages of the present invention will become more apparent by reference to the accompanying drawings and each embodiment.

### BRIEF DESCRIPTION OF THE DRAWINGS

Fig. 1 depicts a communication system according to a first embodiment;
Fig. 2 is a flowchart of an example of process procedures of a communicating method according to the first embodiment;
Fig. 3 depicts setting and an incoming call for a SIP server of the communication system;
Fig. 4 depicts setting and an incoming call for a cellular exchange of the communication system;
Fig. 5 depicts another setting and incoming call for the cellular exchange of the communication system;
Fig. 6 depicts a communication system according to a second embodiment;
Fig. 7 depicts an example of a communication terminal apparatus;
Fig. 8 depicts a configuration example of a program/data storage memory;
Fig. 9 depicts an example of a communication terminal apparatus;
Fig. 10 depicts an example of the cellular exchange;
Fig. 11 depicts a configuration example of the program/data storage memory;
Fig. 12 depicts an example of the SIP server;
Fig. 13 depicts a configuration example of the program/data storage memory;
Fig. 14 depicts an example of an address management table of the cellular exchange;
Fig. 15 depicts an example of an address management table of the SIP server;
Fig. 16 depicts a process sequence in the case of a voice incoming call;
Fig. 17 depicts a process sequence in the case of a data incoming call;
Fig. 18 depicts a process sequence in the case of rejecting an incoming call;
Fig. 19 depicts a process sequence in the case of permitting an incoming call;
Fig. 20 depicts operation in the case of the voice incoming call;
Fig. 21 depicts operation in the case of the data incoming call;
Fig. 22 is a flowchart of process procedures of a communicating program of the communication terminal apparatus;
Fig. 23 is a flowchart of process procedures of a communicating program of the cellular exchange;
Fig. 24 is a flowchart of process procedures of a communicating program of the SIP server;
Fig. 25 depicts an example of an address management table according to a third embodiment;
Fig. 26 is a flowchart of process procedures of a communicating program of the SIP server;
Fig. 27 is a flowchart of process procedures of a communicating program of the cellular exchange according to a fourth embodiment;
Fig. 28 is a flowchart of an example of process procedures of a communicating method according to a fifth embodiment;
Fig. 29 depicts an example of a communication terminal apparatus according to a sixth embodiment;
Fig. 30 depicts an example of a communication terminal apparatus according to a seventh embodiment;
Fig. 31 depicts a communication system according to another embodiment; and
Fig. 32 depicts a communication system according to another embodiment

### DETAILED DESCRIPTION OF THE PREFERRED EMBODIMENTS

### First Embodiment

A first embodiment of the present invention will be described with reference to Fig. 1. Fig. 1 depicts a communication system to which the present invention is applied.

As shown in Fig. 1, this communication system 2 configures a system capable of communicating through a plurality of communication lines (networks), for example, a cellular network 6 or the Internet, i.e., a wireless LAN (Wireless Local Area Network) 8 (hereinafter, "WLAN network 8") with the use of a communication terminal apparatus 4 that is a communication apparatus. Although the cellular network 6 and the WLAN network 8 are illustrated as a plurality of networks in this embodiment, communication with other networks may also be enabled.

The cellular network 6 includes a cellular exchange 10 and a base station 12, and the WLAN network 8 includes a SIP server 14 and a WLAN access point (WLAN-AP) 16. The communication terminal apparatus 4 is connected to the cellular exchange 10 via base station 12 through cellular radio wave 18 and is connected to the SIP server 14 via the WLAN-AP 16, which is a relay station, through the medium of WLAN radio wave 20. That is, the cellular exchange 10 configures a network apparatus of the cellular network 6 for the communication terminal apparatus 4 and the SIP server 14 configures a network apparatus of the WLAN network 8 for the communication terminal apparatus 4.

In the communication system 2, the communication terminal apparatus 4 includes a cellular interface unit CI corresponding to the cellular network 6 and a WLAN interface unit WI corresponding to the WLAN network 8. The cellular interface unit CI and the WLAN interface unit WI are notifying units for the networks, can achieve power-saving by selecting operation depending on selection conditions such as charges and radio field intensity, and can perform communication by detouring an incoming call (so-called call-in) during suspension of operation to the side where operation is maintained. In the communication system 2, a cellular telephone number is assigned to the cellular interface unit CI and a WLAN telephone number is assigned to the WLAN interface unit WI.

Since the communication terminal apparatus 4 includes the cellular interface unit CI corresponding to the cellular network 6 and the WLAN interface unit WI corresponding to the WLAN network 8, the communication system 2 can connect to the cellular network 6 via the base station 12 of the cellular network 6 to perform the cellular communication and can connect to the WLAN network 8 via the WLAN-AP 16 to perform the VoIP (Voice Over Internet Protocol) communication. To support such communications, the cellular exchange 10 of the cellular network 6 controls calls, and the SIP server 14 of the WLAN network 8 is equivalent to the cellular exchange 10 of the cellular network 6 and controls calls in the same way.

The communication system 2 may be configured with the cellular network 6 that can handle the voice calls only and the WLAN network 8 that can handle both the voice calls and the data calls or may be configured with the cellular network 6 that can handle both the voice calls and the data calls.

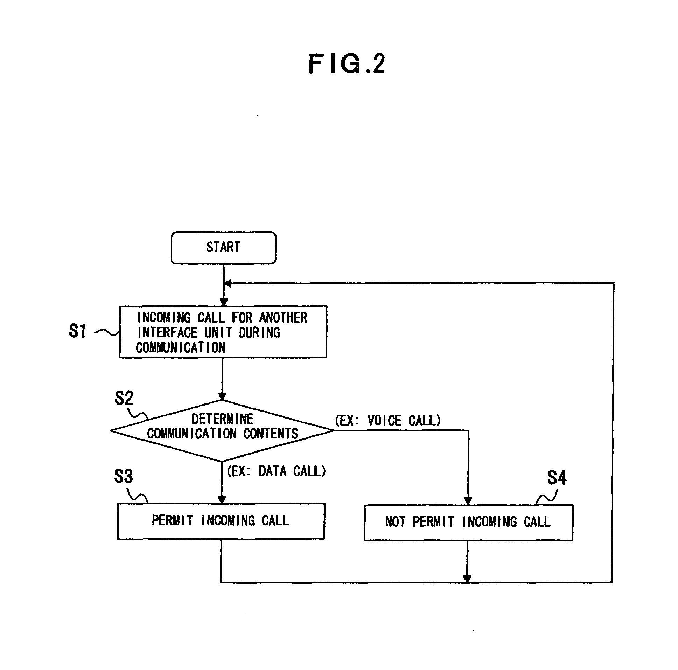

A communicating method using the communication system 2 will be described with reference to Fig. 2. Fig. 2 is a flowchart of process procedures of the communicating method.

In this communicating method, as shown in Fig. 2, while either the cellular interface unit CI or the WLAN interface unit WI is used for communication, the interface unit not in communication receives an incoming call (e.g., an incoming call for the WLAN interface unit WI while the cellular interface unit CI is used) (step S1); communication contents currently communicated and communication contents of the incoming call are compared and determined (step S2); and the incoming call is permitted (step S3) or not permitted (step S4) for the call reception process. For example, when an incoming call for the WLAN interface unit WI is generated during a voice phone call through the cellular interface unit CI, it is determined whether the incoming call is a voice call or data call. If the incoming call is a data call, the incoming call is permitted and the data call reception is performed through the other interface, i.e., the WLAN interface unit WI during the phone call.

In such a configuration, one communication terminal apparatus 4 selectively uses the cellular interface unit CI and the WLAN interface unit WI to control permission or non-permission of an incoming call depending on incoming call contents. This leads to effective utilization of the cellular interface unit CI and the WLAN interface unit WI. As a result, an inactive interface unit can be efficiently utilized along with a communicating interface unit, and the incoming call rejection can be avoided during a phone call, etc., to expand the communication range. Such a communicating method is performed by process procedures of a communicating program described later.

Although setting of this communicating method may be either the setting based on the request from the communication terminal apparatus 4 or the automatic setting of the network, the communicating method in this embodiment is set by the request from the communication terminal apparatus 4.

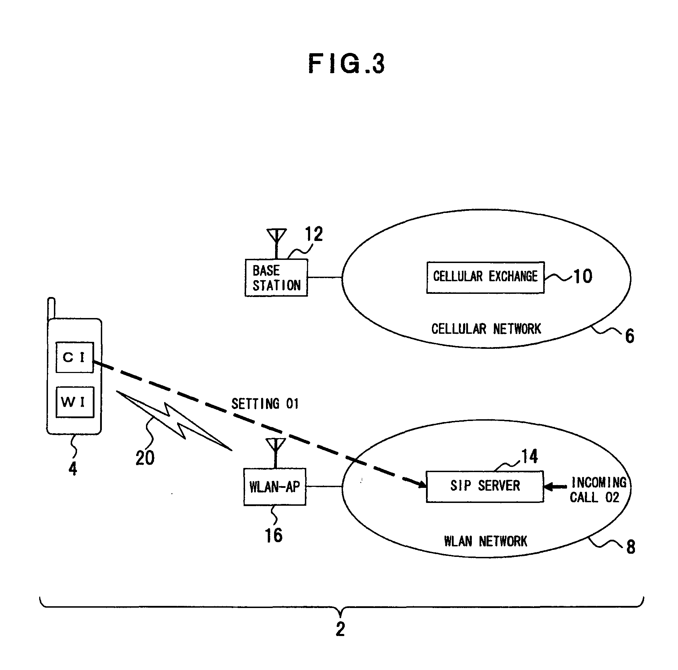

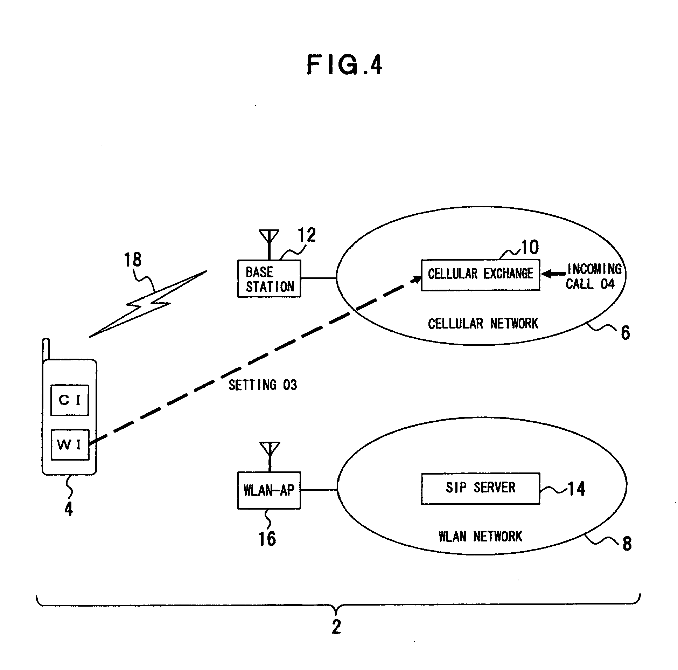

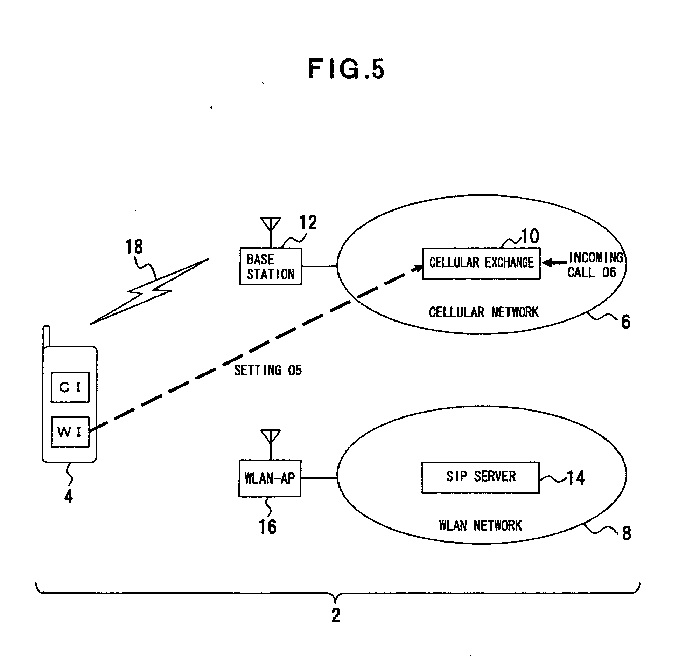

The setting for realizing the above communicating method in the communication system 2 will be described with reference to Figs. 3 to 5. Fig. 3 depicts setting and an incoming call for the SIP server; Fig. 4 depicts setting and an incoming call for the cellular exchange; and Fig. 5 depicts another setting and incoming call for the cellular exchange.

When the voice phone call is performed through the cellular interface unit CI, setting 01 is performed for the SIP server 14 to not permit (to reject due to the busy state) an incoming call if the incoming call is a voice call and to permit an incoming call if the incoming call is a data call, as shown in Fig. 3. With such setting, during the communication of the voice phone call through the cellular interface unit CI, the WLAN interface unit WI can receive an incoming call 02 to perform data communication such as e-mail communication, as described above.

When the voice phone call is performed through the WLAN interface unit WI, if an incoming call is a voice call, setting 03 is performed for the cellular exchange 10 to not permit (to reject due to the busy state) the incoming call, as shown in Fig. 4. With such setting, if an incoming call 04 is generated for the cellular interface unit CI during the communication of the voice phone call through the WLAN interface unit WI, the incoming call is rejected due to the busy state.

When the data communication is performed through the WLAN interface unit WI, if an incoming call is a voice call, setting 05 is performed for the cellular exchange 10 to permit the incoming call, instead of the busy state, as shown in Fig. 5. With such setting, during the communication of data such as e-mails through the WLAN interface unit WI, the cellular interface unit CI can receive a voice incoming call 06.

By the way, since both the cellular network 6 and the WLAN network 8 can perform the data communication if the cellular network 6 can perform the data communication, when the data communication is performed through one network, the setting may be performed to permit an incoming call of the data communication from the other network.

### Second Embodiment

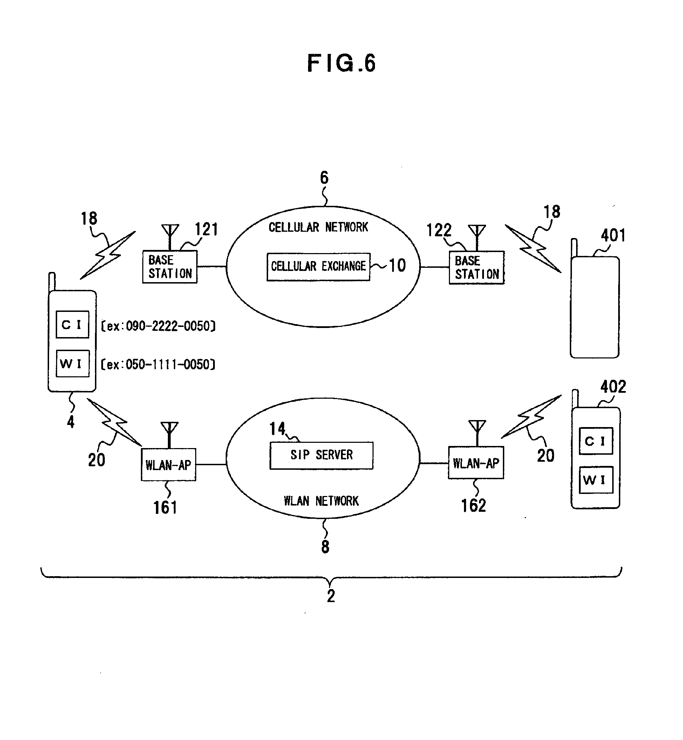

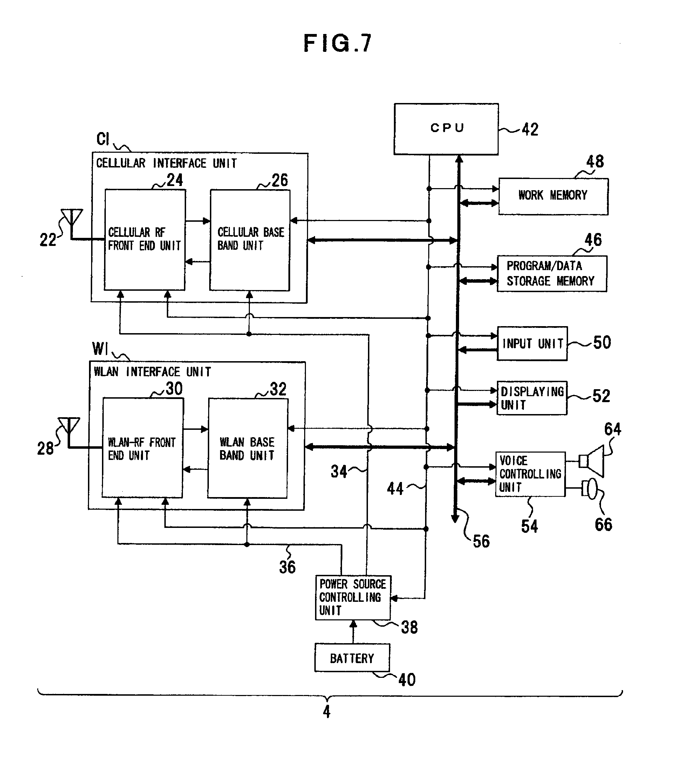

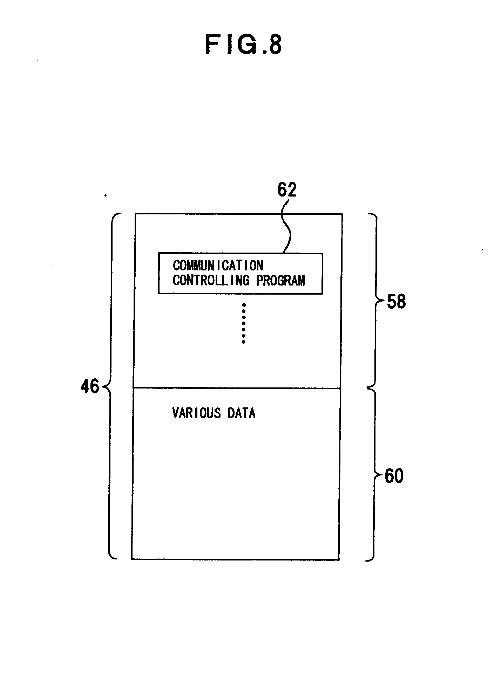

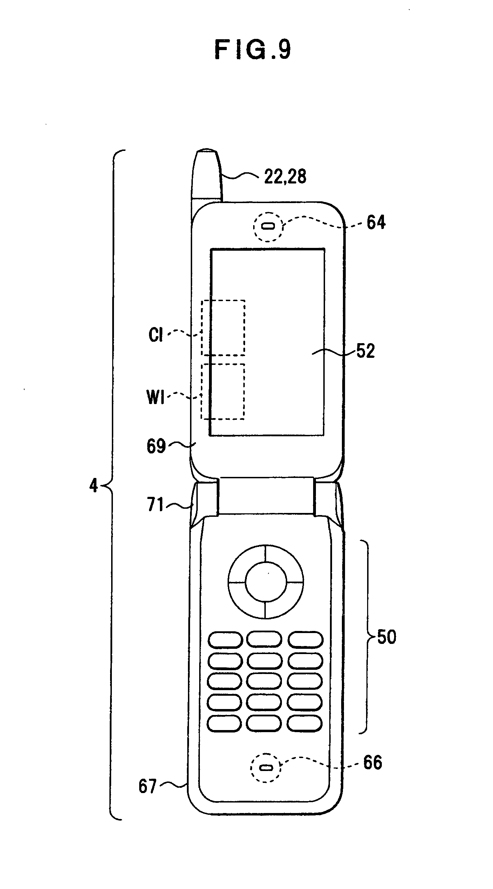

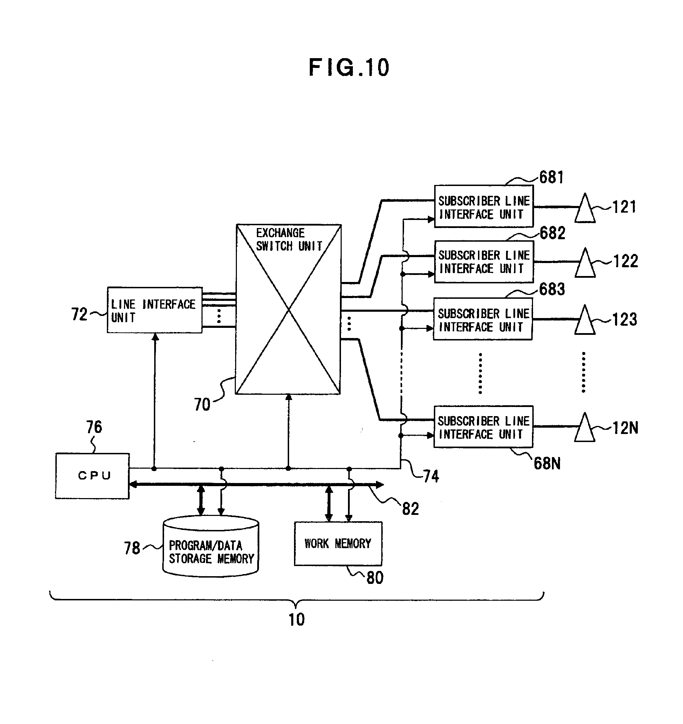

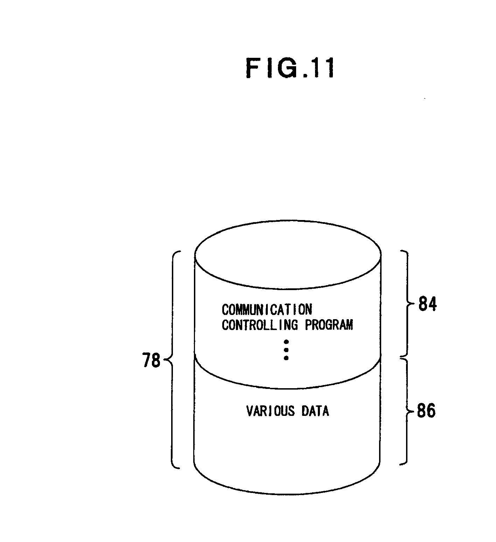

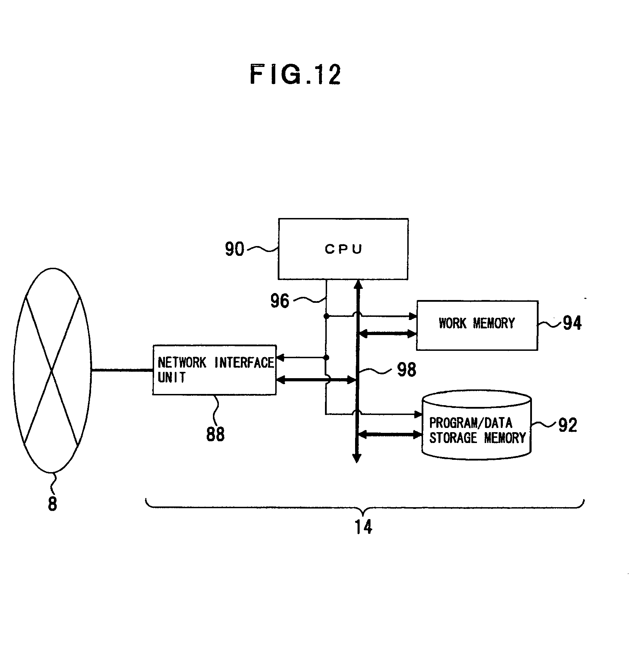

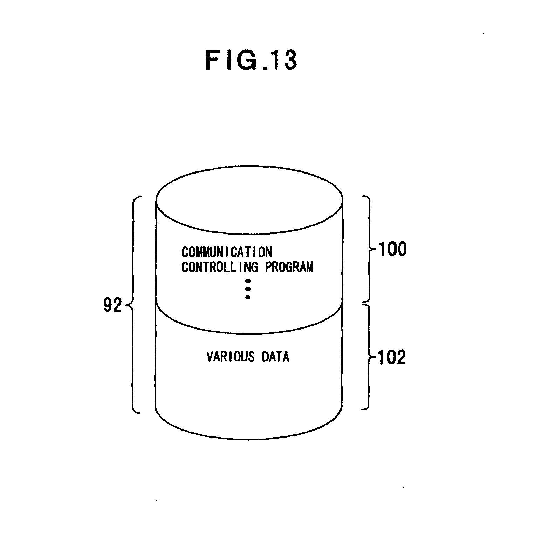

A second embodiment of the present invention will be described with reference to Figs. 6 to 13. Fig. 6 depicts a communication system according to the second embodiment; Fig. 7 depicts a configuration example of a communication terminal apparatus used in the communication system; Fig. 8 depicts a configuration example of a program/data storage memory; Fig. 9 depicts a configuration example of a communication terminal apparatus; Fig. 10 depicts a configuration example of the cellular exchange 10 used in the communication system; Fig. 11 depicts a configuration example of the program/data storage memory; Fig. 12 depicts a configuration example of the SIP server 14 used in the communication system; and Fig. 13 depicts a configuration example of the program/data storage memory. In Figs. 6 to 13, the same reference numerals are added to the same portions as Fig. 1.

As shown in Fig. 6, this communication system 2 clearly shows a communication terminal apparatus 401 that is a phone call destination and another communication terminal apparatus 402 to the communication terminal apparatus 4 to enable communication among the three parties. In this case, the cellular exchange 10 of the cellular network 6 includes base stations 121, 122,... corresponding to the communication terminal apparatus 4, the communication terminal apparatus 401, another communication terminal apparatus 402, etc., and SIP server 14 includes WLAN-APs 161, 162,.... In this case, the cellular interface unit CI is assigned with a telephone number, for example, "090-2222-0050", and the WLAN interface unit WI is assigned with a telephone number, for example, "050-1111-0050".

As shown in Fig. 7, the communication terminal apparatus 4 includes the cellular interface unit CI and the WLAN interface unit WI, and the cellular interface unit CI is a function unit for supporting the base stations 121, 122,... connected to the cellular exchange 10 and includes an antenna 22, a cellular RF (Radio Frequency) front end unit 24, and a cellular base band unit 26. This configuration is the same as the communication terminal apparatus 402.

The WLAN interface unit WI is a function unit for supporting the WLAN-APs 161, 162,... for the SIP server 14 and includes an antenna 28, a WLAN-RF front end unit 30, and a WLAN base band unit 32. The cellular interface unit CI and the WLAN interface unit WI operate independently; each interface unit CI, WI is connected to a battery 40, which is a common power source, through individually disposed power supply lines 34, 36 and a common power source controlling unit 38; and the power supply from the battery 40 is controlled by the power source controlling unit 38. Specifically, the power source controlling unit 38 includes a power supply switching function to select power supply to the cellular interface unit CI and the WLAN interface unit WI as needed.

The interface units CI, WI and the power source controlling unit 38 are connected through a control line 44 to a CPU (Central Processing Unit) 42 that configures a computer as a controlling unit or an information processing unit for performing the power supply control, the communication control, the request and control of permission or non-permission of the incoming calls for the interface units CI, WI to the networks, and other control. The CPU 42 is connected to a program/data storage memory 46, a work memory 48, an input unit 50, a displaying unit 52, and a voice controlling unit 54 through the control line 44 and a data bus 56. The program/data storage memory 46 includes a recording medium such as a ROM (Read-Only Memory); for example, as shown in Fig. 8, a program storage area 58 and a data storage area 60 are established in the program/data storage memory 46; the program storage area 58 stores programs such as a communication controlling program 62; and the data storage area 60 stores various data. The work memory 48 includes a RAM (Random-Access Memory) and is used as a work area.

The input unit 50 is controlled by the CPU 42, is an input means of various pieces of information to the CPU 42, and includes a keyboard, for example. The displaying unit 52 displays various pieces of information such as communication destinations, selection information of the selected interface unit CI, WI, and mail information, under the control of the CPU 42. The voice controlling unit 54 transmits and receives phone call voices under the control of the CPU 42. The voice controlling unit 54 is connected to a speaker 64 that reproduces and outputs reception signals as voices and a microphone 66 that inputs and converts transmission voices into electric signals.

In the communication terminal apparatus 4, as shown in Fig. 9, cases 67 and 69 can be folded with a hinge 71; the case 67 is disposed with the input unit 50 including a cursor key and character keys, and the microphone 66; and the case 69 is disposed with the antennas 22, 28, the displaying unit 52 including, for example, an LCD (Liquid Crystal Display), the speaker 64, etc. The displaying unit 52 displays a power source connection state, etc., of the cellular interface unit CI and the WLAN interface unit WI at the start of a phone call or during a phone call. If the power source connection is switched by manual operation, the displaying unit 52 displays the dialog for the operation and the contents of the setting instruction.

As shown in Fig. 10, the cellular exchange 10 includes the base stations 121, 122,..., 12N and subscriber line interface units 681, 682,..., 68N corresponding to a plurality of communication terminals, along with the communication terminal apparatus 4; the subscriber line interface units 681, 682,..., 68N are connected to an exchange switch unit 70; and the exchange switch unit 70 is connected to a line interface unit 72. The exchange switch unit 70 selects the line interface unit 72 depending on incoming calls to connect communication parties. The line interface unit 72 accepts a call-in signal from the line and transmits the signal to the exchange switch unit 70.

The subscriber line interface units 681, 682,..., 68N, the exchange switch unit 70, and the line interface unit 72 are connected through a control line 74 to a CPU 76 configuring a computer, a program/data storage memory 78, and a work memory 80, and a data bus 82 connects the CPU 76, the program/data storage memory 78, and the work memory 80. The CPU 76 is a controlling unit or an information processing unit, executes programs stored in the program/data storage memory 78 acting as a setting unit that sets permission or non-permission of an incoming call depending on communication contents, controls the subscriber line interface units 681, 682,..., 68N, the exchange switch unit 70, and the line interface unit 72, processes a call reception, receives a switching instruction notification from the communication terminal apparatus 4, stores the notification contents into the program/data storage memory 78, and performs communication control such as execution of the switching instruction notification contents in response to an incoming call. As shown in Fig. 11, the program/data storage memory 78 includes a program storage area 84 and a data storage area 86, and the program storage area 84 stores a communication controlling program corresponding to the communication controlling program 62. The work memory 80 includes a RAM and used as a work area.

As shown in Fig. 12, the SIP server 14 includes a network interface unit 88 connected to the WLAN network 8, and the network interface unit 88 is connected through a control line 96 and a data bus 98 to a CPU 90 acting as a controlling unit and an information processing unit, a program/data storage memory 92 acting as a setting unit that sets permission or non-permission of an incoming call depending on communication contents, and a work memory 94. As shown in Fig. 13, the program/data storage memory 92 includes a program storage area 100 and a data storage area 102, and the program storage area 100 stores a communication controlling program corresponding to the communication controlling program 62. The work memory 94 includes a RAM and used as a work area.

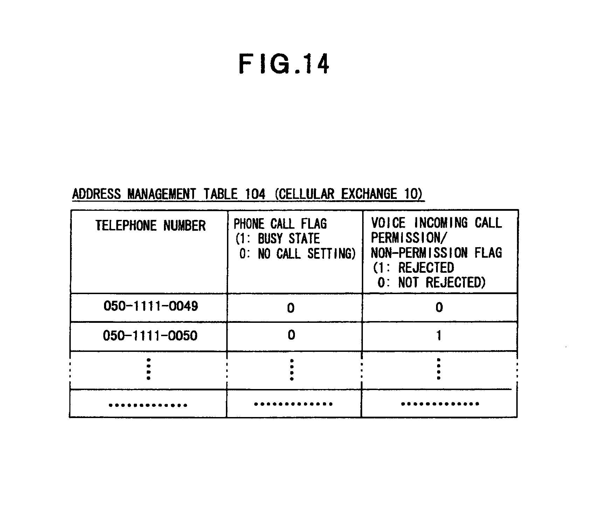

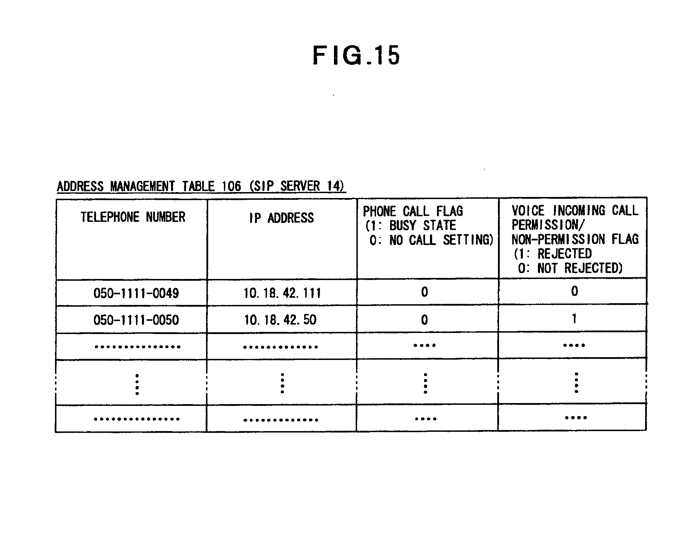

The address management of the cellular exchange 10 of the cellular network 6 and the SIP server 14 of the WLAN network 8 will be described with reference to Figs. 14 and 15. Fig. 14 depicts an example of an address management table of the cellular exchange and Fig. 15 depicts an example of an address management table of the SIP server.

An address management table 104 shown in Fig. 14 is established in the data storage area 86 (Fig. 11) of the program/data storage memory 78 of the cellular exchange 10. The address management table 104 is a means that manages information indicating phone call flags and voice incoming-call permission/non-permission flags for telephone numbers of the communication destinations, and the address management table 104 includes telephone number fields that store telephone numbers of the connection targets, phone call flag setting fields, and voice incoming-call permission/non-permission flag setting fields. The phone call flag setting field is set with either "1" indicating the busy state or "0" indicating no call setting. The voice incoming-call permission/non-permission flag setting field is set with either "1" indicating "rejected" (=non-permission) or "0" indicating "not rejected" (=permission). For an example telephone number "050-1111-0049" stored in the telephone number field, the phone call flag is set to "0" (=no call setting) and the voice incoming-call permission/non-permission flag is set to "0" (not rejected). For an example telephone number "050-1111-0050", the phone call flag is set to "0" (=no call setting) and the voice incoming-call permission/non-permission flag is set to "1" (rejected). The setting executes the communication controlling program in the program/data storage memory 78 of the cellular exchange 10 and the setting is performed by a request and input data from the communication terminal apparatus 4.

An address management table 106 shown in Fig. 15 is established in the data storage area 102 (Fig. 13) of the program/data storage memory 92 of the SIP server 14. The address management table 106 is a means that manages information indicating IP addresses, phone call flags and voice incoming-call permission/non-permission flags for telephone numbers of the communication destinations, and the address management table 106 includes telephone number fields that store telephone numbers of the connection targets, IP address fields, phone call flag setting fields, and voice incoming-call permission/non-permission flag setting fields. In this address management table 106, the phone call flag setting field is also set with either "1" indicating the busy state or "0" indicating no call setting. The voice incoming call permission/non-permission flag setting field is set with either "1" indicating "rejected" (=non-permission) or "0" indicating "not rejected" (=permission). For an example telephone number "050-1111-0049" stored in the telephone number field, the IP address is set to "10.18.42.111"; the phone call flag is set to "0" (=no call setting); and the voice incoming call permission/non-permission flag is set to "0" (not rejected). For an example telephone number "050-1111-0050", the IP address is set to "10.18.42.50"; the phone call flag is set to "0" (=no call setting); and the voice incoming call permission/non-permission flag is set to "1" (rejected). The setting executes the communication controlling program in the program/data storage memory 78 of the SIP server 14 and the setting is performed by a request and input data from the communication terminal apparatus 4.

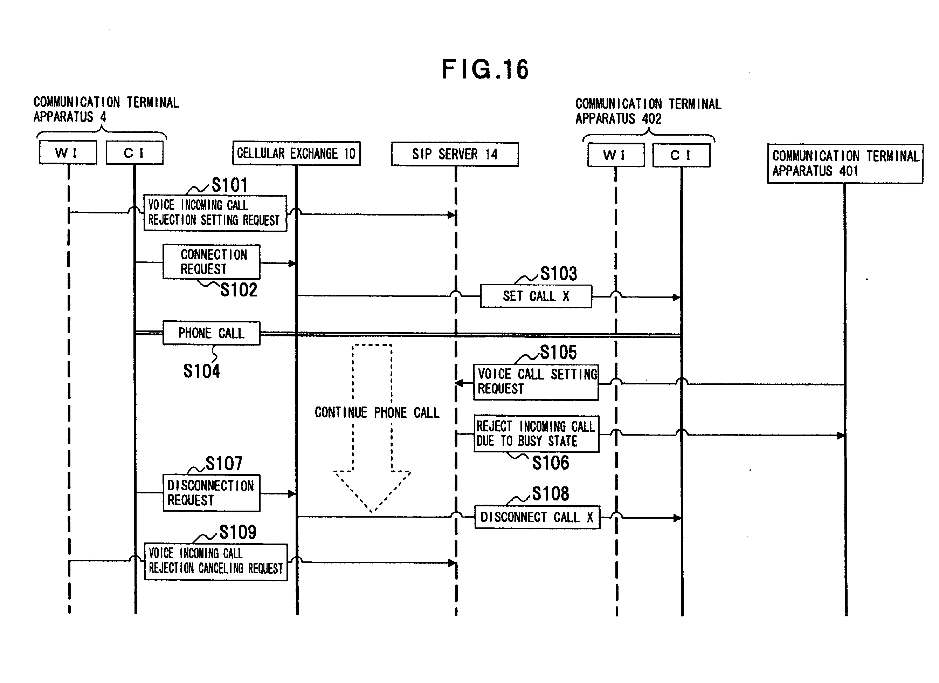

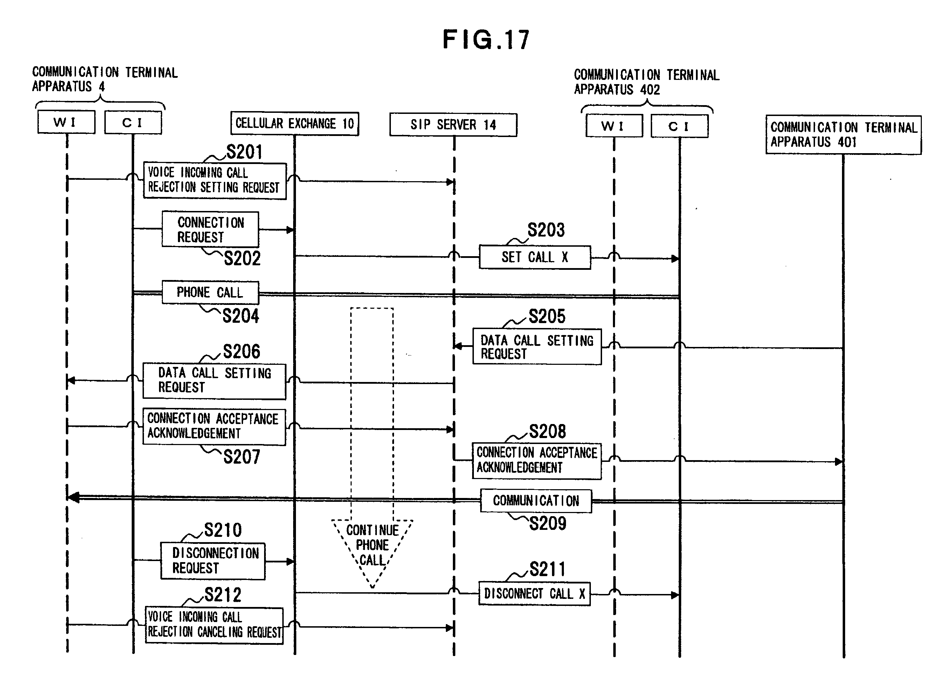

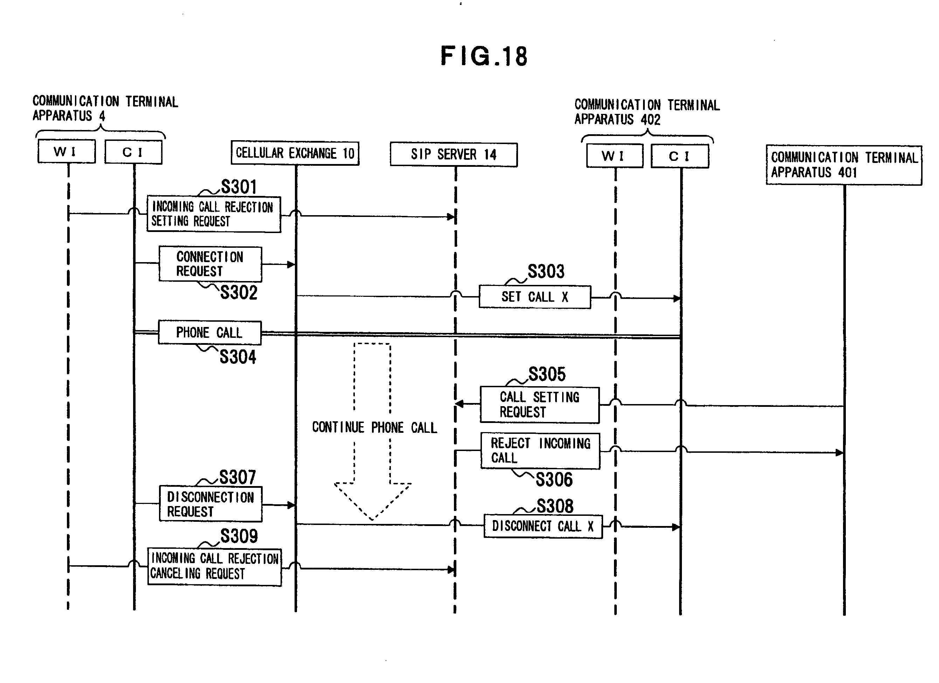

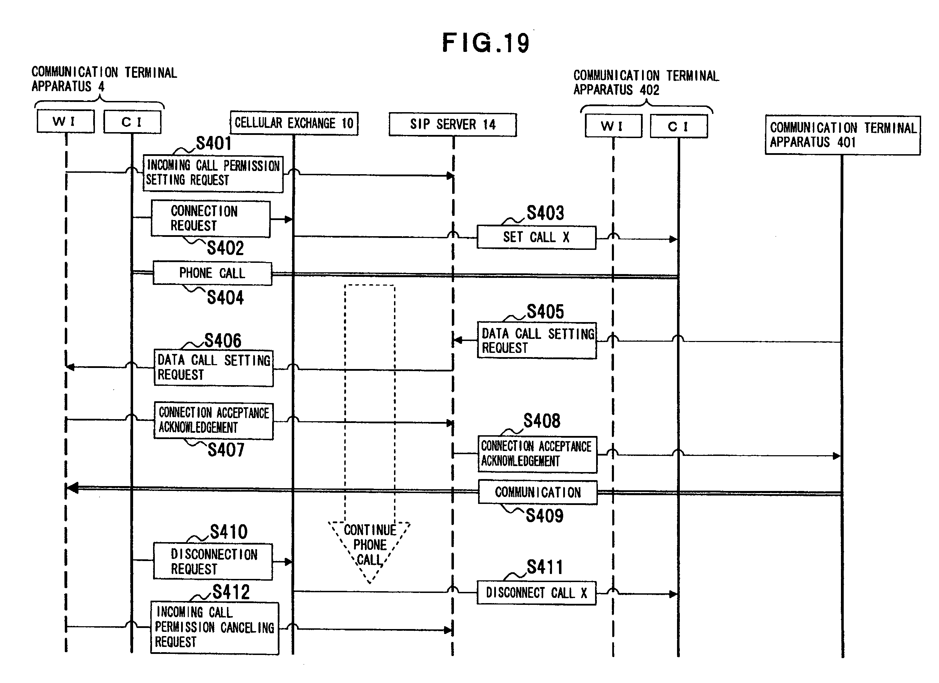

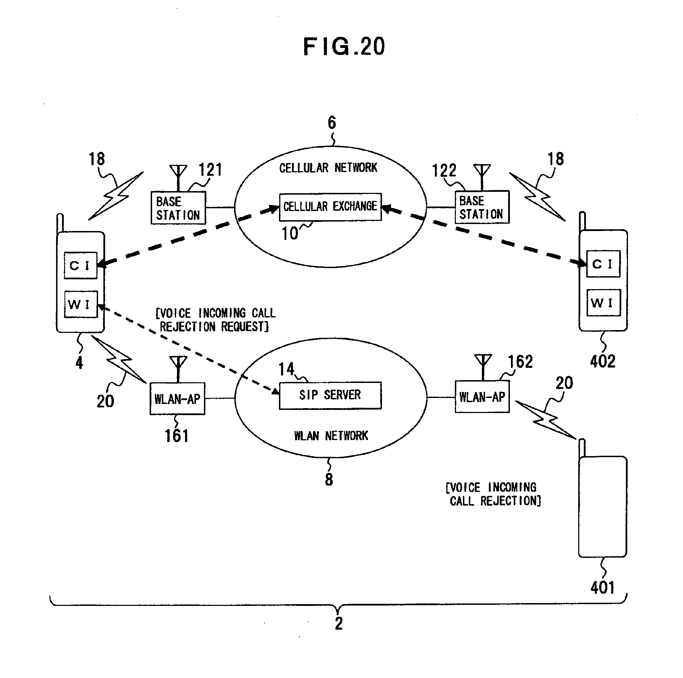

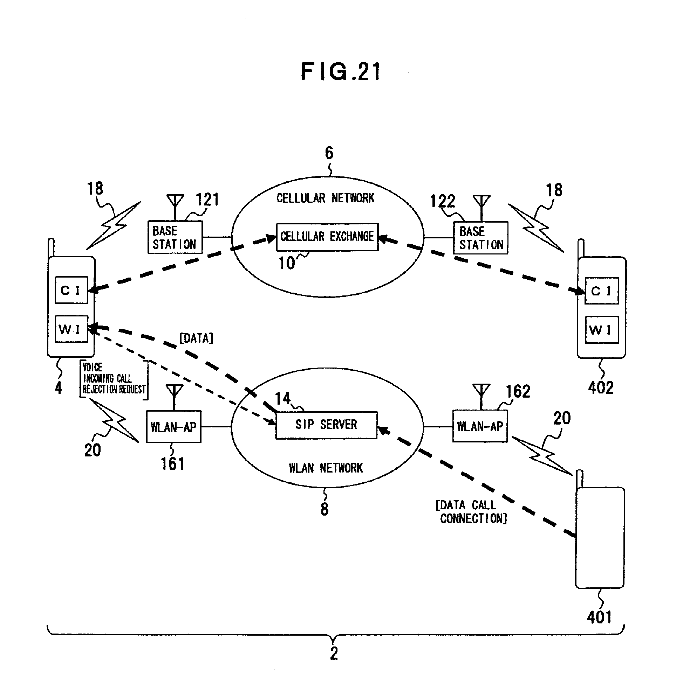

Process sequences of the communication system will be described with reference to Figs. 16, 17, 18, 19, 20, and 21. Fig. 16 depicts a process sequence in the case of a voice incoming call; Fig. 17 depicts a process sequence in the case of a data incoming call; Fig. 18 depicts a process sequence in the case of rejecting an incoming call; Fig. 19 depicts a process sequence in the case of permitting an incoming call; Fig. 20 depicts operation in the case of the voice incoming call; and Fig. 21 depicts operation in the case of the data incoming call.

Each process sequence (Figs. 16 to 19) is process procedures of the communication controlling program, which are performed in the communication system 2 shown in Fig. 6 between the communication terminal apparatus 4 and the cellular exchange 10, the SIP server 14, the communication terminal apparatus 401, or another communication terminal apparatus 402.

### (1) Process for Voice Incoming Call

In the case of the voice incoming call, as shown in Fig. 16, the setting of the voice incoming call rejection is requested from the WLAN interface unit WI of the communication terminal apparatus 4 to the SIP server 14 (step S101). A connection request is generated from the cellular interface unit CI to the cellular exchange 10 (step S102); based on this connection request, a call X is set from the cellular exchange 10 to the cellular interface unit CI of another communication terminal apparatus 402 (step S103); and a phone call is established between the cellular interface unit CI of the communication terminal apparatus 4 and the cellular interface unit CI of the communication terminal apparatus 402 (step S104). This phone call is continued until a disconnection request (step S107) is issued.

While this phone call is continued, when a setting request for a voice call is generated from the communication terminal apparatus 401 to the SIP server 14 (step S105), the setting of the voice call is rejected since the SIP server 14 has the setting based on the request for the voice incoming call rejection (step S106). That is, the incoming call is rejected due to the busy state.

When the cellular exchange 10 receives a disconnection request issued from the cellular interface unit CI of the communication terminal apparatus 4 upon termination of the phone call (step S107), the disconnection of the call X is performed from the cellular exchange 10 to the communication terminal apparatus 402 (step S108). As a result, the continuation of the phone call is cancelled. Correspondingly to this cancellation of the continuation of the phone call, a cancellation request for the voice incoming call rejection is issued from the WLAN interface WI of the communication terminal apparatus 4 to the SIP server 14 (step S109), and the setting of the voice incoming call rejection is cancelled in the SIP server 14.

### (2) Process for Data Incoming Call

In the case of the data incoming call, as shown in Fig. 17, the setting of the voice incoming call rejection is requested from the WLAN interface unit WI of the communication terminal apparatus 4 to the SIP server 14 (step S201). A connection request is generated from the cellular interface unit CI to the cellular exchange 10 (step S202); based on this connection request, a call X is set from the cellular exchange 10 to the cellular interface unit CI of the communication terminal apparatus 402 (step S203); and a phone call is established between the cellular interface unit CI of the communication terminal apparatus 4 and the cellular interface unit CI of the communication terminal apparatus 402 (step S204). This phone call is continued until a disconnection request (step S210) is issued.

While this phone call is continued, a setting request for a data call is generated from the communication terminal apparatus 401 to the SIP server 14 (step S205); the SIP server 14 receives this request and issues a request for data call setting to the WLAN interface unit WI of the communication terminal apparatus 4 since the SIP server 14 has the setting of permitting data calls (step S206); the WLAN interface unit WI of the communication terminal apparatus 4 issues an acknowledgement of connection acceptance (step S207); and the SIP server 14 receives this acknowledgement and issues a connection acceptance acknowledgement notification to the communication terminal apparatus 401 (step S208). As a result, while the phone call is continued between the cellular interface unit CI of the communication terminal apparatus 4 and the communication terminal apparatus 402, the communication due to the data call is performed between the WLAN interface unit WI of the communication terminal apparatus 4 and the communication terminal apparatus 401 (step S209).

When the cellular exchange 10 receives a disconnection request issued from the cellular interface unit CI of the communication terminal apparatus 4 upon termination of the phone call (step S21 0), the disconnection of the call X is performed from the cellular exchange 10 to the communication terminal apparatus 402 (step S211). As a result, the continuation of the phone call is cancelled. Correspondingly to this cancellation of the continuation of the phone call, a cancellation request for the voice incoming call rejection is issued from the WLAN interface WI of the communication terminal apparatus 4 to the SIP server 14 (step S212), and the setting of the voice incoming call rejection is cancelled in the SIP server 14.

### (3) Process for Incoming Call Rejection

In the case of the incoming call rejection, as shown in Fig. 18, the setting of the incoming call rejection is requested from the WLAN interface unit WI of the communication terminal apparatus 4 to the SIP server 14 (step S301). A connection request is generated from the cellular interface unit CI to the cellular exchange 10 (step S302); based on this connection request, a call X is set from the cellular exchange 10 to the cellular interface unit CI of the communication terminal apparatus 402 (step S303); and a phone call is established between the cellular interface unit CI of the communication terminal apparatus 4 and the cellular interface unit CI of the communication terminal apparatus 402 (step S304). This phone call is continued until a disconnection request (step S307) is issued.

While this phone call is continued, a call setting request is generated from the communication terminal apparatus 401 to the SIP server 14 (step S305), and the SIP server 14 receives this request and issues an incoming call rejection notification to the communication terminal apparatus 401 since the SIP server has the setting of rejecting incoming calls (step S306).

When the cellular exchange 10 receives a disconnection request issued from the cellular interface unit CI of the communication terminal apparatus 4 upon termination of the phone call (step S307), the disconnection of the call X is performed from the cellular exchange 10 to the communication terminal apparatus 402 (step S308). As a result, the continuation of the phone call is cancelled. Correspondingly to this cancellation of the continuation of the phone call, a cancellation request for the incoming call rejection is issued from the WLAN interface WI of the communication terminal apparatus 4 to the SIP server 14 (step S309), and the setting of the incoming call rejection is cancelled in the SIP server 14.

### (4) Process for Incoming Call Permission

In the case of the incoming call permission, as shown in Fig. 19, the setting of the voice incoming call permission is requested from the WLAN interface unit WI of the communication terminal apparatus 4 to the SIP server 14 (step S401). A connection request is generated from the cellular interface unit CI to the cellular exchange 10 (step S402); based on this connection request, a call X is set from the cellular exchange 10 to the cellular interface unit CI of the communication terminal apparatus 402 (step S403); and a phone call is established between the cellular interface unit CI of the communication terminal apparatus 4 and the cellular interface unit CI of the communication terminal apparatus 402 (step S404). This phone call is continued until a disconnection request (step S410) is issued.

While this phone call is continued, a call setting request is generated from the communication terminal apparatus 401 to the SIP server 14 (step S405); the SIP server 14 receives this request and issues a request for call setting to the WLAN interface unit WI of the communication terminal apparatus 4 since the SIP server 14 has the setting of permitting data calls (step S406); the WLAN interface unit WI of the communication terminal apparatus 4 issues an acknowledgement of connection acceptance (step S407); and the SIP server 14 receives this acknowledgement and issues a connection acceptance acknowledgement notification to the communication terminal apparatus 401 (step S408). As a result, while the phone call is continued between the cellular interface unit CI and the communication terminal apparatus 402, the communication due to the data call is performed between the WLAN interface unit WI of the communication terminal apparatus 4 and the communication terminal apparatus 401 (step S409).

When the cellular exchange 10 receives a disconnection request issued from the cellular interface unit CI of the communication terminal apparatus 4 upon termination of the phone call (step S410), the disconnection of the call X is performed from the cellular exchange 10 to the communication terminal apparatus 402 (step S411). As a result, the continuation of the phone call is cancelled. Correspondingly to this cancellation of the continuation of the phone call, a cancellation request for the voice incoming call permission is issued from the WLAN interface WI of the communication terminal apparatus 4 to the SIP server 14 (step S412), and the setting of the voice incoming call permission is cancelled in the SIP server 14.

### (5) Specific Processing Form

If the voice incoming call rejection is set in the SIP server 14, as shown in Fig. 20, when an incoming call is generated by a voice call from the communication terminal apparatus 401 to the SIP server 14 of the WLAN network 8 while the communication terminal apparatus 4 is communicating with the communication terminal apparatus 402 through the cellular network 6, the SIP server 14 rejects the voice incoming call.

If the data incoming call permission is set in the SIP server 14, as shown in Fig. 21, when an incoming call is generated by a data call from the communication terminal apparatus 401 to the SIP server 14 of the WLAN network 8 while the communication terminal apparatus 4 is communicating with the communication terminal apparatus 402 through the cellular network 6, the SIP server 14 connects to the WLAN interface unit WI of the communication terminal apparatus 4 to receive the data incoming call. The WLAN interface unit WI receives data such as e-mails and stores the communication contents into the data storage area 60 of the program/data storage memory 46. The data contents are deployed and checked on the displaying unit 52 during the phone call or after the phone call is terminated.

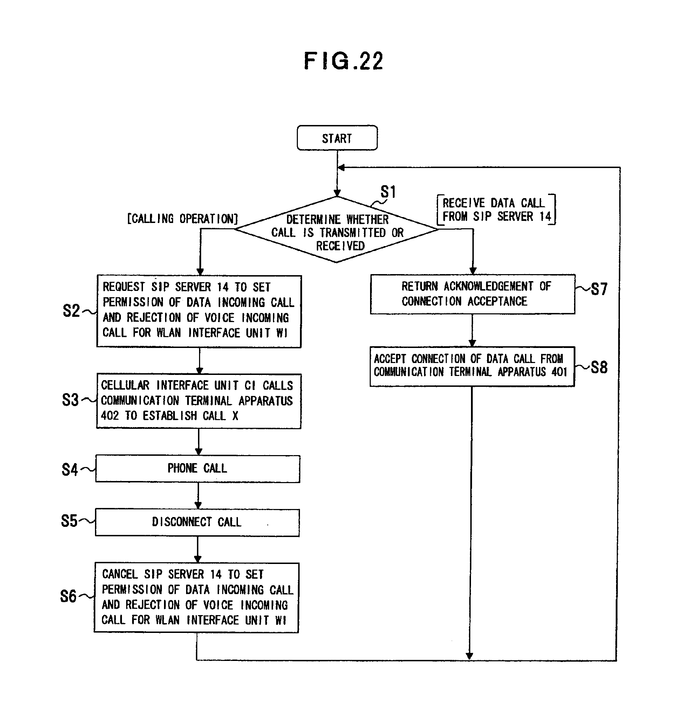

The process procedures of the communication terminal apparatus 4 will be described with reference to Fig. 22. Fig. 22 is a flowchart of the process procedures of the communicating program realizing the communicating method.

The process procedures include a process of the calling operation and a process based on the data call reception notification from the SIP server 14.

When the operation of the communication terminal apparatus 4 is started, it is determined whether the process is the calling operation or the call reception (step S1) and the SIP server 14 is requested to perform the setting in the case of the calling operation (step S2). That is, in this case, the SIP server 14 is requested to perform the setting of the data incoming call permission and the voice incoming call rejection at the WLAN interface unit WI. In this situation, the cellular interface unit CI calls another communication terminal apparatus 402 to establish a call (step S3). This call is the call X of Fig. 16, for example.

A phone call is performed in accordance with the establishment of the call (step S4), and the call is disconnected when the phone call is terminated (step S5). The SIP server 14 is requested to cancel the setting of the data incoming call permission and the voice incoming call rejection at the WLAN interface unit WI (step S6).

If the data call reception notification is received from the SIP server 14 at step S1, an acknowledgement of connection acceptance is returned (step S7) and the data call connection is accepted from the communication terminal apparatus 401 (step S8).

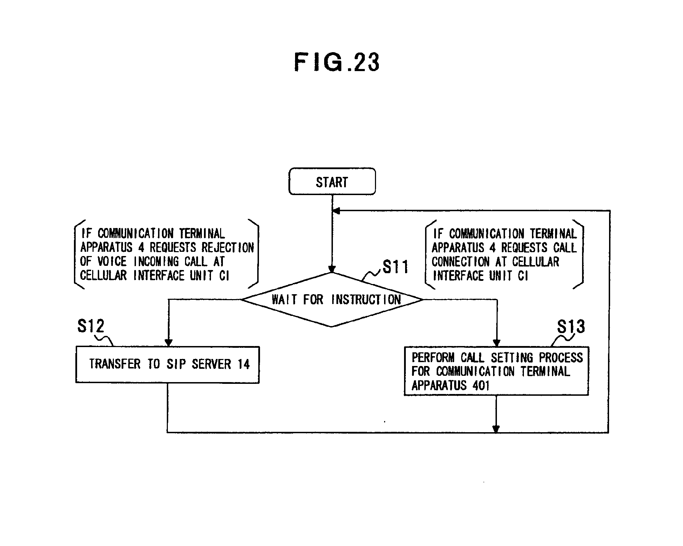

The process procedures of the cellular exchange 10 will be described with reference to Fig. 23. Fig. 23 is a flowchart of the process procedures of the communicating program realizing the communicating method.

In an instruction waiting state (step S11), if the communication terminal apparatus 4 requests the setting of the voice incoming call rejection at the cellular interface unit CI, the cellular exchange 10 transfers the request contents to the SIP server 14 (step S12) and goes back to step S11.

In the instruction waiting state (step S11), if the communication terminal apparatus 4 requests the call connection at the cellular interface unit CI, the cellular exchange 10 performs a call setting process for the communication terminal apparatus 401 (step S13) and goes back to step S11.

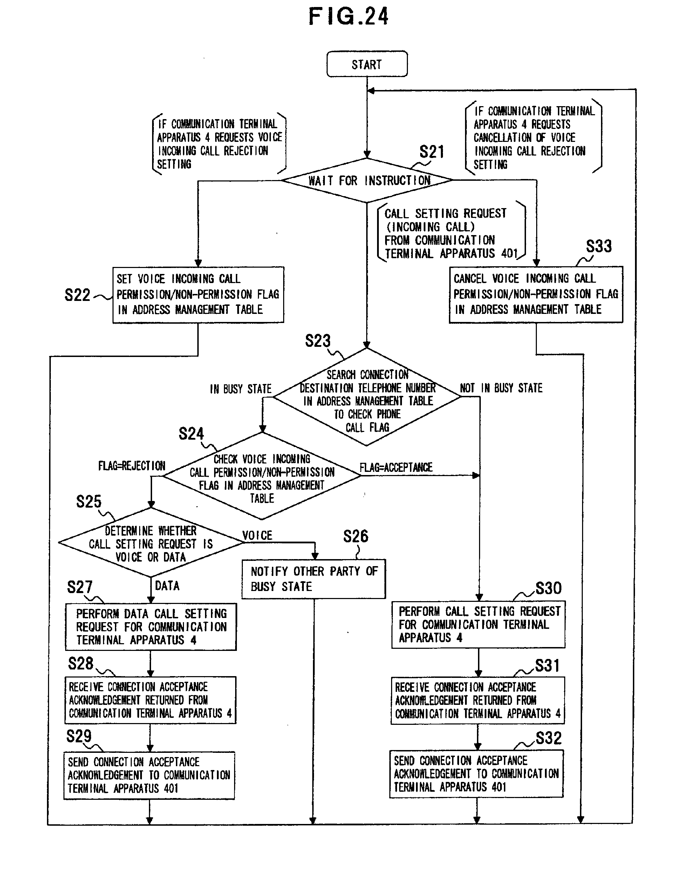

The process procedures of the SIP server 14 will be described with reference to Fig. 24. Fig. 24 is a flowchart of the process procedures of the communicating program realizing the communicating method.

These process procedures correspond to the process procedures of the communication terminal apparatus 4 and are the process of the communication program executed by the SIP server 14 for realizing the above communicating method.

In this case, the SIP server 14 receives requests from the communication terminal apparatus 4 and the communication terminal apparatus 401 to perform the processes based on the requests.

### A. Request for Setting Voice Incoming Call Rejection

The SIP server 14 determines the request contents (step S21). If the request contents are a request for setting the voice incoming call rejection from the communication terminal apparatus 4, the voice incoming call permission/non-permission flag is set in the address management table 106 (Fig. 15) of the communication terminal apparatus 4 (step S22) and the process goes to the standby state of step S21.

### B. Call Setting Request

If the request contents are a call setting request (incoming call) from the communication terminal apparatus 401, the connection destination telephone number of the notification is searched in the address management table 106 (Fig. 15) to check the phone call flag (step S23). In this case, if the line is "busy", the voice incoming call permission/non-permission flag is checked in the address management table 106 (step S24). In the case of the flag="non-permission" (=rejected), it is determined whether the call setting request is voice or data (step S25). That is, the determination is performed from the request contents of the call setting request. If the call setting request is voice, it is notified that the line is busy (step S26) and the process goes back to step S21.

If the call setting request is data, the data call setting request is performed for the communication terminal apparatus 4 (step S27); the acknowledgement of connection acceptance is returned and received from the communication terminal apparatus 4 (step S28); the acknowledgement of connection acceptance is sent to the communication terminal apparatus 401 (step S29); and the process goes back to step S21.

By the way, if the line is not busy in the process of checking the phone call flag at step S23 or in the case of the flag=acceptance in the process of checking the voice incoming call permission/non-permission flag at step S24, the call setting request is performed for the communication terminal apparatus 4 (step S30); the acknowledgement of connection acceptance is returned and received from the communication terminal apparatus 4 (step S31); the acknowledgement of connection acceptance is sent to the communication terminal apparatus 401 (step S32); and the process goes back to step S21.

### C. Cancellation of Voice Incoming Call Rejection Setting

If the request contents are a request for canceling the voice incoming call rejection setting from the communication terminal apparatus 4, the voice incoming call permission/non-permission flag is cancelled in the address management table 106 (Fig. 15) of the communication terminal apparatus 4 (step S33) and the process goes to the standby state of step S21.

### Third Embodiment

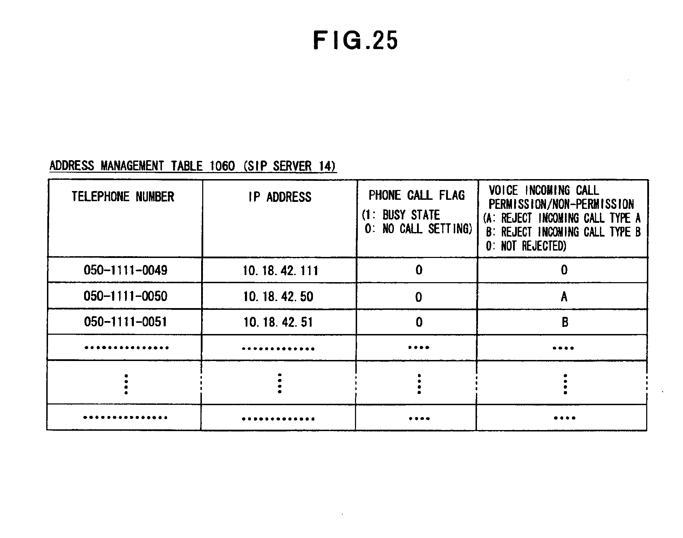

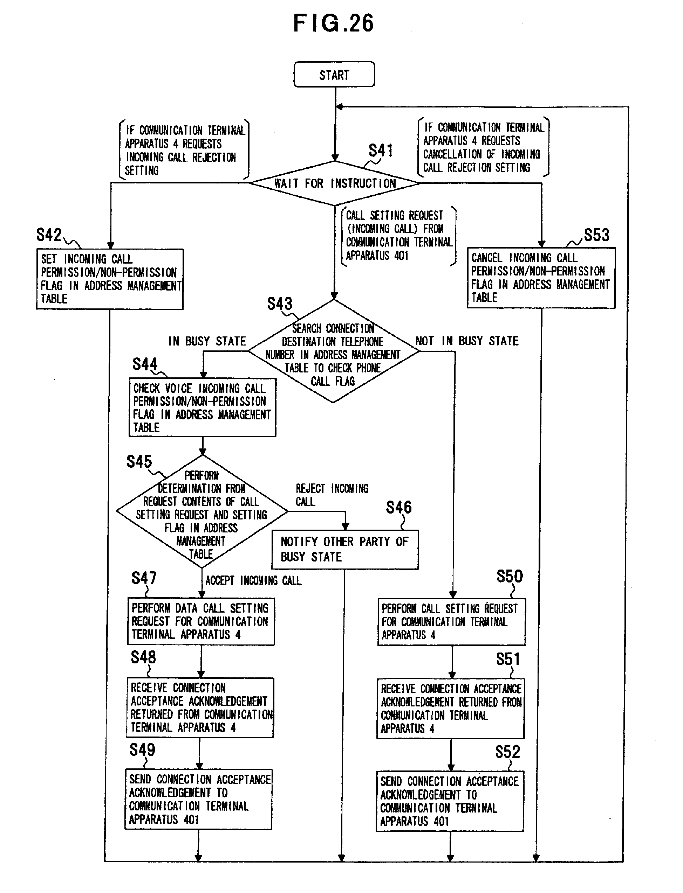

A third embodiment of the present invention will be described with reference to Figs. 25 and 26. Fig. 25 depicts an address management table of the SIP server and Fig. 26 is a flowchart of process procedures of the communicating program realizing the communicating method as process procedures of the SIP server 14. In Fig. 25, the same reference numerals are added to the same portions as Fig. 15.

The third embodiment uses the configuration of the communication system of Figs. 1 to 5 (the first embodiment), performs the process thereof, and uses the communication system of Figs. 6 to 13 and the process of Figs. 16 to 21 (the second embodiment).

In this embodiment, as shown in Fig. 25, an address management table 1060 is used for the above address management table 106 (Fig. 15); the voice incoming call permission/non-permission flags are set to "A", "B", and "0"; "A" indicates that an incoming call type A is rejected; "B" indicates that an incoming call type B is rejected; and "0" is indicates that an incoming call is not rejected.

In this case, For an example telephone number "050-1111-0049" stored in the telephone number field, the IP address is set to "10.18.42.111**";** the phone call flag is set to "0" (=no call setting); and the voice incoming call permission/non-permission flag is set to "0" (not rejected). For an example telephone number "050-1111-0050", the IP address is set to "10.18.42.50"; the phone call flag is set to "0" (=no call setting); and the voice incoming call permission/non-permission flag is set to "A" (=the incoming call type A is rejected). For an example telephone number "050-1111-0051", the IP address is set to "10.18.42.51**";** the phone call flag is set to "0" (=no call setting); and the voice incoming call permission/non-permission flag is set to "B" (=the incoming call type B is rejected).

The process procedures of the SIP server 14 in this case will be described with reference to Fig. 26. Fig. 26 is a flowchart of process procedures of a communicating program realizing the communicating method.

These process procedures correspond to the process procedures of the communication terminal apparatus 4 and are the process of the communication program executed by the SIP server 14 for realizing the above communicating method.

In this case, the SIP server 14 receives requests from the communication terminal apparatus 4 and the communication terminal apparatus 401 to perform the processes based on the requests.

### A. Request for Setting Incoming Call Rejection

The SIP server 14 determines the request contents (step S41). If the request contents are a request for setting the incoming call rejection from the communication terminal apparatus 4, the voice incoming call permission/non-permission flag is set in the address management table 1060 (Fig. 25) of the communication terminal apparatus 4 (step S42) and the process goes to the standby state of step S41.

### B. Call Setting Request

If the request contents are a call setting request (incoming call) from the communication terminal apparatus 401, the connection destination telephone number of the notification is searched in the address management table 1060 (Fig. 25) to check the phone call flag (step S43). In this case, if the line is "busy", the voice incoming call permission/non-permission flag is checked in the address management table 1060 (step S44). That is, whether the incoming call is accepted or rejected is determined from the request contents of the call setting request and the setting flag in the address management table 1060 (step S45). If the incoming call is rejected, it is notified that the line is busy (step S46) and the process goes back to step S41.

If the incoming call is accepted, the data call setting request is performed for the communication terminal apparatus 4 (step S47); the acknowledgement of connection acceptance is returned and received from the communication terminal apparatus 4 (step S48); the acknowledgement of connection acceptance is sent to the communication terminal apparatus 401 (step S49); and the process goes back to step S41.

By the way, if "the line is not busy" in the process of checking the phone call flag at step S43, the call setting request is performed for the communication terminal apparatus 4 (step S50); the acknowledgement of connection acceptance is returned and received from the communication terminal apparatus 4 (step S51); the acknowledgement of connection acceptance is sent to the communication terminal apparatus 401 (step S52); and the process goes back to step S41.

### C. Cancellation of Incoming Call Rejection Setting

If the request contents are a request for canceling the incoming call rejection setting from the communication terminal apparatus 4, the voice incoming call permission/non-permission flag is cancelled in the address management table 1060 (Fig. 25) of the communication terminal apparatus 4 (step S53) and the process goes to the standby state of step S41.

### Fourth Embodiment

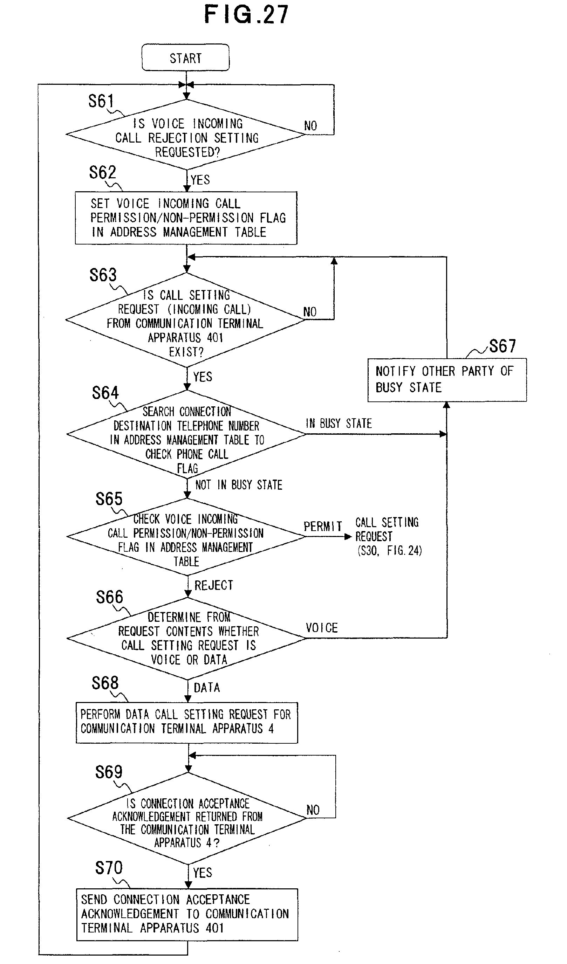

A fourth embodiment of the present invention will be described with reference to Fig. 27. Fig. 27 is a flowchart of process procedures of the communicating program realizing the communicating method as process procedures of the cellular exchange 10.

The fourth embodiment uses the configuration of the communication system of Figs. 1 to 5 (the first embodiment), performs the process thereof, and uses the communication system of Figs. 6 to 13 and the process of Figs. 16 to 21 (the second embodiment).

In this case, the cellular exchange 10 determines whether the request for the setting of the voice incoming call rejection is received (step S61); if the request is not received (NO at step S61), the standby state is maintained; and if the request for the incoming call rejection is received (YES at step S61), the voice incoming-call permission/non-permission flag is set in the address management table 104 (Fig. 14) (step S62).

In this state, it is determined whether a call setting request (incoming call) from the communication terminal apparatus 401 exists (step S63), and if an incoming call exists (YES at step S63), the telephone number of the connection destination is searched in the address management table 104 (Fig. 14) to check the phone call flag (step S64). If the line is not "busy", the address management table 104 (Fig. 14) is searched to check the voice incoming call permission/non-permission flag (step S65). In the case of the flag="permission", the call setting is requested (e.g., step S30 of Fig. 24); in the case of the flag="rejection", it is determined from the request contents whether the incoming call request is voice or data (step S66); in the case of voice, the other party is notified of the busy state (step S67); and the process goes back to step S63. The same process is performed if the line is busy at step S64.

If it is identified at step S66 that the incoming call request is data, the data call setting is requested from the communication terminal apparatus 4 (step S68), it is determined whether the acknowledgement of connection acceptance is returned from the communication terminal apparatus 4 (step S69); if the acknowledgement of connection acceptance is returned, the acknowledgement of connection acceptance is sent to the communication terminal apparatus 401 (step S70); and the process goes back to step S61.

### Fifth Embodiment

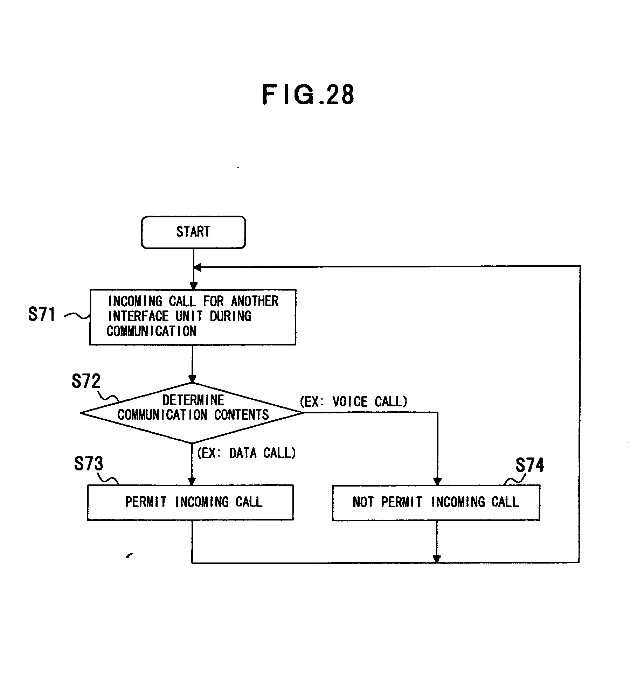

A fifth embodiment of the present invention will be described with reference to Fig. 28. Fig. 28 is a flowchart of process procedures of the communicating program.

Although the cellular network 6 and the WLAN network 8 control the permission or non-permission of the incoming calls for the cellular interface unit CI and the LAN interface unit WI of the communication terminal apparatus 4 based on the requests from the communication terminal apparatus 4, the control may be performed by the communication terminal apparatus 4.

This embodiment also uses the communication system 2 of Fig. 6, the communication terminal apparatus 4 of Fig. 7, the program/data storage memory 46 shown in Fig. 8, and the configurations shown in the first to fourth embodiments.

In this communicating method, as shown in Fig. 28, while either the cellular interface unit CI or the WLAN interface unit WI is used for communication, the interface unit not in communication receives an incoming call (e.g., an incoming call for the WLAN interface unit WI while the cellular interface unit CI is used) (step S71). With regard to the communication contents, the communication contents currently communicated and the communication contents of the incoming call are compared and determined (step S72), and the incoming call is permitted (step S73) or not permitted (step S74) for the call reception process. For example, when an incoming call for the WLAN interface unit WI is generated during a voice phone call through the cellular interface unit CI, it is determined whether the incoming call is a voice call or data call, and if the incoming call is a data call, the incoming call is permitted and the data call reception is performed through the other interface, i.e., the WLAN interface unit WI during the phone call.

In such a configuration, one communication terminal apparatus 4 selectively uses the cellular interface unit CI and the WLAN interface unit WI to control permission or non-permission of an incoming call depending on incoming call contents. This leads to effective utilization of the cellular interface unit CI and the WLAN interface unit WI. As a result, an inactive interface unit can be efficiently utilized along with a communicating interface unit, and the incoming call rejection can be avoided during a phone call, etc., to expand the communication range. Such a communicating method is performed by the process procedures of the communication control program 62 in the communication terminal apparatus 4.

### Sixth Embodiment

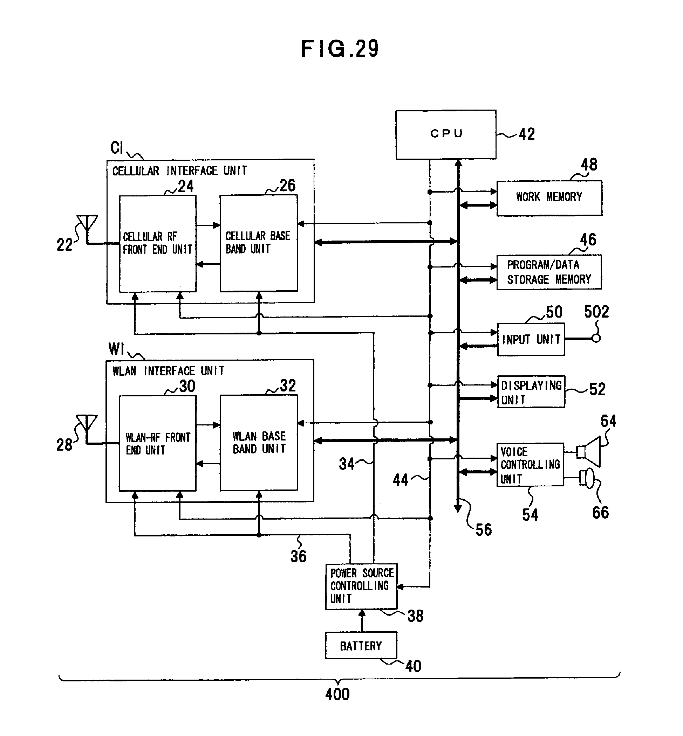

A sixth embodiment of the present invention will be described with reference to Fig. 29. Fig. 29 depicts a configuration example of the communication terminal apparatus of the sixth embodiment. In Fig. 29, the same reference numerals are added to the same portions as Fig. 7.

In this embodiment, a communication terminal apparatus 400 can concurrently communicate with a plurality of communication terminal apparatuses at a plurality of communication destinations by switching voice with the use of a button 502 at the input unit 50 or other manual operations. The button 502 can be assigned to any key of the input unit 50 of the communication terminal apparatus 4 shown in Fig. 9. If such a communication terminal apparatus 400 is used, the voice concurrent communication may be permitted on the cellular network 6 and the WLAN network 8.

### Seventh Embodiment

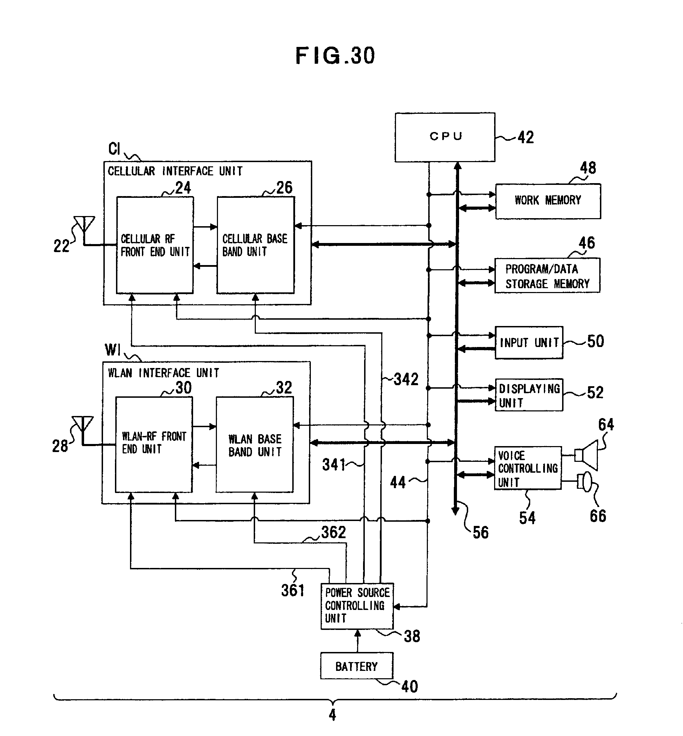

If the permission or non-permission of the incoming call is performed by the communication terminal apparatus 4, the connection of the power source may be switched for the cellular interface unit CI and the WLAN interface unit WI. In such a case, as shown in Fig. 7, the switching of the power source connection may be configured such that the connection of the battery 40 is selectively switched for the cellular interface unit CI and the WLAN interface unit WI. Alternatively, for example, as shown in Fig. 30, power supply lines 341, 342 are individually connected to the cellular RF front end unit 24 and the cellular base band unit 26 of the cellular interface unit CI; similarly, power supply lines 361, 362 are individually connected to the WLAN-RF front end unit 30 and the WLAN base band unit 32 of the WLAN interface unit WI; and the power source controlling unit 38 may switch the connection of the battery 40 acting as a power source for each unit to control the permission and non-permission of the incoming call.

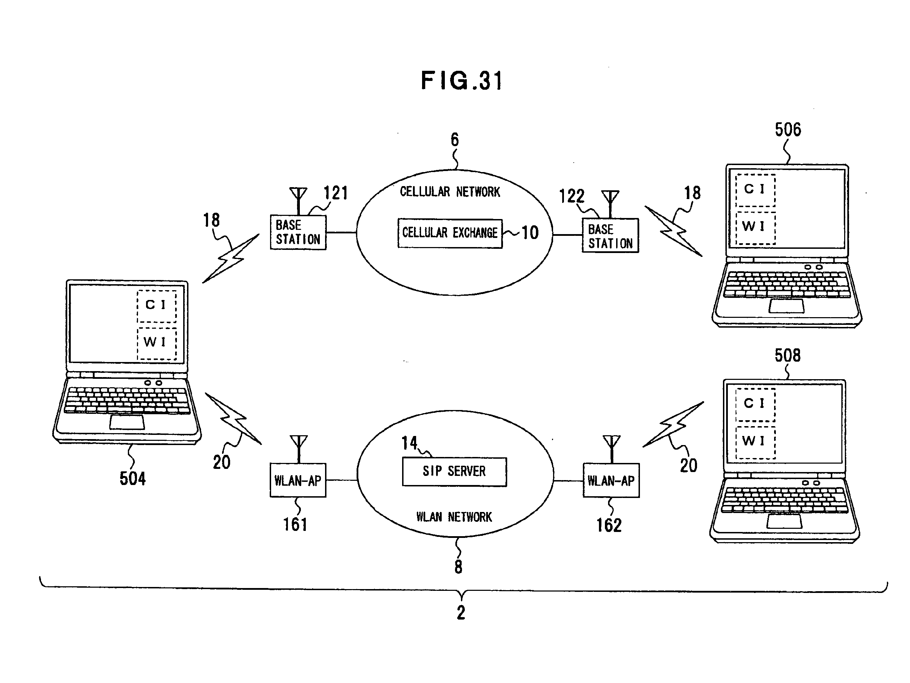

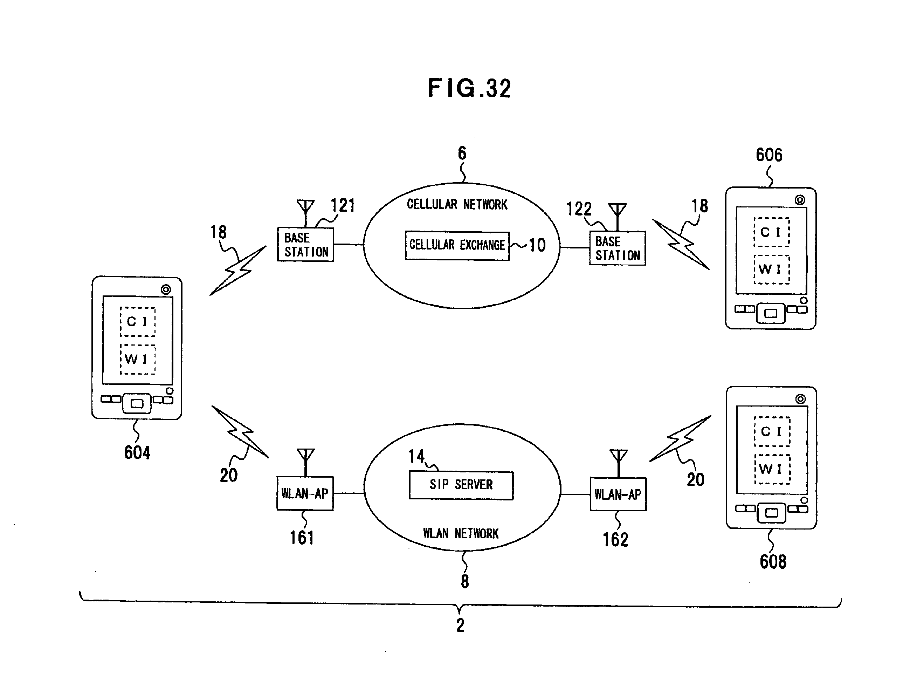

Other Embodiments
(1) Although the permission of the data incoming call and the non-permission of the voice communication is set based on the voice communication in the above embodiments, the permission or non-permission of the incoming call may be controlled with data types in the data communication.
(2) Although the communication terminal apparatus 4 is illustrated as a communication apparatus in the above embodiments, the present invention is applicable as long as a communication apparatus includes the cellular interface unit CI and the WLAN interface unit WI to enable communication with a plurality of communication networks. For example, as shown in Fig. 31, the communication system 2 may be configured with personal computers (PCs) 504, 506, 608... equipped with the cellular interface units CI and the WLAN interface units WI and including the communication functions, or as shown in Fig. 32, the communication system 2 may be configured with personal digital assistants (PDAs) 604, 606, 608... including the same functions.
(3) Although the communication apparatus is illustrated as the communication terminal apparatus 4, the PC 504, the PDA 604, etc., including the cellular interface unit CI and the WLAN interface unit WI in the above embodiments, the switching of the power source may be performed for three or more interface units such as an interface unit corresponding to other communication networks, for example, WiMAX in addition to the so-called DUAL terminal including such a complex communication function.

Although the most preferred embodiments, etc., of the present invention have been described as above, the present invention is not limited to the above description; it is obvious that various modifications and changes can be made by those skilled in the art based on the gist of the present invention described in the claims or disclosed in the specification; and it is needless to say that such modifications and changes are within the range of the present invention.

The present invention is useful because a communication apparatus and a plurality of interface units are efficiently utilized and a communication range is expanded since a plurality of interface units of the communication apparatus can be controlled to permit or not permit an incoming call depending on incoming call contents and the same or different communication contents can be received during the communication of certain communication contents.

## Claims

1. A communication apparatus (4) wirelessly connected to a plurality of networks (6, 8) configured to enable call transmission/reception through the networks, comprising:
first and second interface units (CI, WI) corresponding to the networks; and **characterized by**:
a controlling unit (42) configured to, when a first call (X) for another communication apparatus (401, 402) is requested from the first interface unit, request a network apparatus (10, 14) in the networks to set permission or non-permission depending on whether the first call is a voice call or a data call, and set permission or non-permission of a second incoming call for the second interface unit based on said setting depending on the voice call or the data call, the first call being either a voice call of a voice phone call or a data call of data communication and the second incoming call being either a voice call of a voice phone call or a data call of data communication,
wherein the controlling unit is operable to request the network apparatus to set the permission or the non-permission of the second incoming call dependently on the voice call or the data call of the second incoming call while maintaining the voice phone call or the data communication that is established based on the first call.

2. The communication apparatus of claim 1, wherein
the controlling unit is configured to request setting of permission for the second incoming call, which is a different type from the first call, and
the second incoming call of the different type is permitted.

3. The communication apparatus of claim 1 or 2, wherein
when the communication based on the first call is the voice phone call, the controlling unit is configured to request setting of permission for the second incoming call of the data call, and
the second incoming call of the data call is permitted.

4. The communication apparatus of claim 1, 2 or 3, wherein
when the communication based on the first call is the data communication, the controlling unit is configured to request setting of permission for the second incoming call of the voice call, and
the second incoming call of the voice call is permitted.

5. The communication apparatus of any one of claims 1 to 4, wherein
when the voice phone call is established based on the first call, the controlling unit is configured to request the network apparatus to set permission for the second incoming call of the voice call, and
the second incoming call is permitted by the network apparatus to enable concurrent calls through the first and second interface units with a plurality of communication apparatuses at a plurality of communication destinations, the concurrent calls being made by switching each voice.

6. A communication system including a plurality of networks and a communication apparatus wirelessly connected to the networks configured to enable call transmission/reception through the networks,
the communication apparatus has first and second interface units corresponding to the networks, and **characterized by** a controlling unit configured to, when a first call for another communication apparatus is requested from the first interface unit, request a network apparatus in the networks to set permission or non-permission depending on whether the first call is a voice call or a data call, and set permission or non-permission of a second incoming call for the second interface unit based on said setting depending on the voice call or the data call, the first call being a voice call of a voice phone call or a data call of data communication and the second incoming call being a voice call of a voice phone call or a data call of data communication, and
the controlling unit is operable to request the network apparatus to set the permission or the non-permission of the second incoming call dependently on the voice call or the data call of the second incoming call while maintaining the voice phone call or the data communication that is established based on the first call.

7. The communication system of claim 6, wherein
the communication apparatus is configured to request setting of permission for the second incoming call, which is a different type from the first call, and
the second incoming call of the different type is permitted.

8. The communication system of claim 6 or 7, wherein
when the communication based on the first call is the voice phone call, the communication apparatus is configured to request setting of permission for the second incoming call of the data call, and
the second incoming call of the data call is permitted.

9. The communication system of claim 6, 7 or 8, wherein
when the communication based on the first call is the data communication, the communication apparatus configured to request setting of permission for the second incoming call of the voice call, and
the second incoming call of the voice call is permitted.

10. The communication system of any one of claims 6 to 9, wherein
when the voice phone call is established based on the first call, the communication apparatus is configured to request the network apparatus to set permission for the second incoming call of the voice call, and
the second incoming call is permitted by the network apparatus to enable concurrent calls through the first and second interface units with a plurality of communication apparatuses at a plurality of communication destinations, the concurrent calls being made by switching each voice.

11. A communicating method used for wirelessly connecting a plurality of networks with a communication apparatus to perform call transmission/reception between the communication apparatus and the networks, the method comprising:
requesting a first call for another communication apparatus, from a first interface unit in the communication apparatus, and wirelessly connecting a network with the first interface unit; and
requesting a network apparatus in the networks to set permission or non-permission depending on whether the first call is a voice call or a data call, and setting permission or non-permission of a second incoming call for a second interface unit in the communication apparatus based on said setting depending on the voice call or the data call when the first call for said another communication apparatus is requested, the first call being a voice call of a voice phone call or a data call of data communication and the second incoming call being a voice call of a voice phone call or a data call of data communication,
wherein the second incoming call is controlled to be permitted or not permitted by the network apparatus that sets the permission or the non-permission of the second incoming call dependently on the voice call or the data call of the second incoming call while maintaining the voice phone call or the data communication that is established based on the first call.

12. The communicating method of claim 11, wherein
setting of permission for the second incoming call, which is a different type from the first call, is requested, and the second incoming call of the different type is permitted.

13. The communicating method of claim 11 or 12, wherein
when the communication based on the first call is the voice phone call, setting of permission for the second incoming call of the data call is requested, and
the second incoming call of the data call is permitted.

14. The communicating method of any one of claims 11 to 13, wherein
when the communication based on the first call is the data communication, setting of permission for the second incoming call of the voice call is requested, and
the second incoming call of the voice call is permitted.

15. The communicating method of any one of claims 11 to 14, wherein
when the voice phone call is established based on the first call, the network apparatus is requested to set permission for the second incoming call of the voice call, and
the second incoming call is permitted by the network apparatus to enable concurrent calls through the first and second interface units with a plurality of the communication apparatuses at a plurality of communication destinations, the concurrent calls being made by switching each voice.

16. A computer-readable recording medium storing a communicating program comprising code means adapted to perform the steps of a communicating method when executed on a computer, the communicating program being used for wirelessly connecting a plurality of networks with a communication apparatus to perform call transmission/reception between the communication apparatus and the networks, the communicating method comprising:
requesting a first call for another communication apparatus, from a first interface unit in the communication apparatus, and wirelessly connecting a network with the first interface unit; and
requesting a network apparatus in the networks to set permission or non-permission depending on whether the first call is a voice call or a data call, and setting permission or non-permission of a second incoming call for a second interface unit in the communication apparatus based on said setting depending on the voice call or the data call when the first call for said another communication apparatus is requested, the first call being a voice call of a voice phone call or a data call of data communication and the second incoming call being a voice call of a voice phone call or a data call of data communication,
wherein the second incoming call is controlled to be permitted or not permitted by the network apparatus that sets the permission or the non-permission of the second incoming call dependently on the voice call or the data call of the second incoming call while maintaining the voice phone call or the data communication that is established based on the first call.

## Patentansprüche

1. Kommunikationsgerät (4), das kabellos mit einer Mehrzahl von Netzwerken (6, 8) verbunden ist, die konfiguriert sind, um eine(n) Anrufübertragung/-empfang durch die Netzwerke zu ermöglichen, enthaltend:
erste und zweite Schnittstelleneinheiten (CI, WI), die den Netzwerken entsprechen; und **gekennzeichnet durch**:
eine Steuereinheit (42), die konfiguriert ist, um, wenn ein erster Anruf (X) für ein anderes Kommunikationsgerät (401, 402) von der ersten Schnittstelleneinheit angefordert wird, ein Netzwerkgerät (10, 14) in den Netzwerken aufzufordern, eine Genehmigung oder Nichtgenehmigung in Abhängigkeit davon einzustellen, ob der erste Anruf ein Sprachanruf oder ein Datenanruf ist, und eine Genehmigung oder Nichtgenehmigung eines zweiten eingehenden Anrufs für die zweite Schnittstelleneinheit basierend auf der Einstellung einzustellen, die von dem Sprachanruf oder dem Datenanruf abhängt, wobei der erste Anruf entweder ein Sprachanruf von einem Sprachtelefonanruf oder ein Datenanruf von einer Datenkommunikation ist und der zweite eingehende Anruf entweder ein Sprachanruf von einem Sprachtelefonanruf oder ein Datenanruf von einer Datenkommunikation ist,
wobei die Steuereinheit betreibbar ist, um das Netzwerkgerät aufzufordern, die Genehmigung oder Nichtgenehmigung des zweiten eingehenden Anrufs abhängig von dem Sprachanruf oder dem Datenanruf des zweiten eingehenden Anrufs einzustellen, während der Sprachtelefonanruf oder die Datenkommunikation aufrecht erhalten wird, der/die basierend auf dem ersten Anruf eingerichtet wurde.

2. Kommunikationsgerät nach Anspruch 1, wobei
die Steuereinheit konfiguriert ist, um die Einstellung der Genehmigung für den zweiten eingehenden Anruf, der bezüglich des ersten Anrufs ein unterschiedlicher Typ ist, anzufordern, und
der zweite eingehende Anruf genehmigt wird.

3. Kommunikationsgerät nach Anspruch 1 oder 2, wobei,
wenn die Kommunikation basierend auf dem ersten Anruf der Sprachtelefonanruf ist, die Steuereinheit konfiguriert ist, um die Einstellung der Genehmigung für den zweiten eingehenden Anruf des Datenanrufs anzufordern, und
der zweite eingehende Anruf des Datenanrufs genehmigt wird.

4. Kommunikationsgerät nach Anspruch 1, 2 oder 3, wobei,
wenn die Kommunikation basierend auf dem ersten Anruf die Datenkommunikation ist, die Steuereinheit konfiguriert ist, um die Einstellung der Genehmigung für den zweiten eingehenden Anruf des Sprachanrufs anzufordern, und
der zweite eingehende Anruf des Sprachanrufs genehmigt wird.

5. Kommunikationsgerät nach einem der Ansprüche 1 bis 4, wobei,
wenn der Sprachtelefonanruf basierend auf dem ersten Anruf eingerichtet ist, die Steuereinheit konfiguriert ist, um das Netzwerkgerät zu veranlassen, die Genehmigung für den zweiten eingehenden Anruf des Sprachanrufs einzustellen, und
der zweite eingehende Anruf durch das Netzwerkgerät genehmigt wird, um gleichzeitige Anrufe durch die ersten und zweiten Schnittstelleneinheiten mit einer Mehrzahl von Kommunikationsgeräten zu einer Mehrzahl von Kommunikationszielen zu ermöglichen, wobei die gleichzeitigen Anrufe durch Umschalten jeder Stimme ausgeführt werden.

6. Kommunikationssystem, das eine Mehrzahl von Netzwerken und ein Kommunikationsgerät enthält, das kabellos mit den Netzwerken verbunden ist, die konfiguriert sind , um eine(n) Anrufübertragung/-empfang durch die Netzwerke zu ermöglichen,
wobei das Kommunikationsgerät erste und zweite Schnittstelleneinheiten hat, die den Netzwerken entsprechen, und **gekennzeichnet ist durch** eine Steuereinheit, die konfiguriert ist, um, wenn ein erster Anruf für ein anderes Kommunikationsgerät von der ersten Schnittstelleneinheit angefordert wird, ein Netzwerkgerät in den Netzwerken aufzufordern, eine Genehmigung oder Nichtgenehmigung in Abhängigkeit davon einzustellen, ob der erste Anruf ein Sprachanruf oder ein Datenanruf ist, und eine Genehmigung oder Nichtgenehmigung eines zweiten eingehenden Anrufs für die zweite Schnittstelleneinheit basierend auf der Einstellung einzustellen, die von dem Sprachanruf oder dem Datenanruf abhängt, wobei der erste Anruf entweder ein Sprachanruf von einem Sprachtelefonanruf oder ein Datenanruf von einer Datenkommunikation ist und der zweite eingehende Anruf entweder ein Sprachanruf von einem Sprachtelefonanruf oder ein Datenanruf von einer Datenkommunikation ist, und
wobei die Steuereinheit betreibbar ist, um das Netzwerkgerät aufzufordern, die Genehmigung oder Nichtgenehmigung des zweiten eingehenden Anrufs abhängig von dem Sprachanruf oder dem Datenanruf des zweiten eingehenden Anrufs einzustellen, während der Sprachtelefonanruf oder die Datenkommunikation aufrecht erhalten wird, der/die basierend auf dem ersten Anruf eingerichtet wurde.

7. Kommunikationssystem nach Anspruch 6, wobei
das Kommunikationsgerät konfiguriert ist, um die Einstellung der Genehmigung für den zweiten eingehenden Anruf, der bezüglich des ersten Anrufs ein unterschiedlicher Typ ist, anzufordern, und
der zweite eingehende Anruf genehmigt wird.

8. Kommunikationssystem nach Anspruch 6 oder 7, wobei,
wenn die Kommunikation basierend auf dem ersten Anruf der Sprachtelefonanruf ist, das Kommunikationsgerät konfiguriert ist, um die Einstellung der Genehmigung für den zweiten eingehenden Anruf des Datenanrufs anzufordern, und
der zweite eingehende Anruf des Datenanrufs genehmigt wird.

9. Kommunikationssystem nach Anspruch 6, 7 oder 8, wobei,
wenn die Kommunikation basierend auf dem ersten Anruf die Datenkommunikation ist, das Kommunikationsgerät konfiguriert ist, um die Einstellung der Genehmigung für den zweiten eingehenden Anruf des Sprachanrufs anzufordern, und
der zweite eingehende Anruf des Sprachanrufs genehmigt wird.

10. Kommunikationssystem nach einem der Ansprüche 6 bis 9, wobei,
wenn der Sprachtelefonanruf basierend auf dem ersten Anruf eingerichtet ist, das Kommunikationsgerät konfiguriert ist, um das Netzwerkgerät zu veranlassen, die Genehmigung für den zweiten eingehenden Anruf des Sprachanrufs einzustellen, und
der zweite eingehende Anruf durch das Netzwerkgerät genehmigt wird, um gleichzeitige Anrufe durch die ersten und zweiten Schnittstelleneinheiten mit einer Mehrzahl von Kommunikationsgeräten zu einer Mehrzahl von Kommunikationszielen zu ermöglichen, wobei die gleichzeitigen Anrufe durch Umschalten jeder Stimme ausgeführt werden.

11. Kommunikationsverfahren, das zum kabellosen Verbinden einer Mehrzahl von Netzwerken mit einem Kommunikationsgerät verwendet wird, um eine(n) Anrufübertragung/-empfang zwischen dem Kommunikationsgerät und den Netzwerken auszuführen, wobei das Verfahren enthält:
Anfordern eines ersten Anrufs für ein anderes Kommunikationsgerät von einer ersten Schnittstelleneinheit in dem Kommunikationsgerät und kabelloses Verbinden eines Netzwerks mit der ersten Schnittstelleneinheit; und
Auffordern eines Netzwerkgeräts in den Netzwerken, um eine Genehmigung oder Nichtgenehmigung in Abhängigkeit davon einzustellen, ob der erste Anruf ein Sprachanruf oder ein Datenanruf ist, und eine Genehmigung oder Nichtgenehmigung eines zweiten eingehenden Anrufs für eine zweite Schnittstelleneinheit in dem Kommunikationsgerät basierend auf der Einstellung einzustellen, die von dem Sprachanruf oder dem Datenanruf abhängt, wenn der erste Anruf für das andere Kommunikationsgerät angefordert wurde, wobei der erste Anruf entweder ein Sprachanruf von einem Sprachtelefonanruf oder ein Datenanruf von einer Datenkommunikation ist und der zweite eingehende Anruf entweder ein Sprachanruf von einem Sprachtelefonanruf oder ein Datenanruf von einer Datenkommunikation ist,
wobei der zweite eingehende Anruf gesteuert wird, um von dem Netzwerkgerät genehmigt oder nicht genehmigt zu werden, das die Genehmigung oder Nichtgenehmigung des zweiten eingehenden Anrufs abhängig von dem Sprachanruf oder dem Datenanruf des zweiten eingehenden Anrufs einstellt, während der Sprachtelefonanruf oder die Datenkommunikation aufrecht erhalten wird, der/die basierend auf dem ersten Anruf eingerichtet wurde.

12. Kommunikationsverfahren nach Anspruch 11, wobei das Einstellen der Genehmigung für den zweiten eingehenden Anruf, der bezüglich des ersten Anrufs ein unterschiedlicher Typ ist, angefordert wird, und der zweite eingehende Anruf vom unterschiedlichen Typ genehmigt wird.

13. Kommunikationssystem nach Anspruch 11 oder 12, wobei,
wenn die Kommunikation basierend auf dem ersten Anruf der Sprachtelefonanruf ist, das Einstellen der Genehmigung für den zweiten eingehenden Anruf des Datenanrufs angefordert wird, und
der zweite eingehende Anruf des Datenanrufs genehmigt wird.

14. Kommunikationssystem nach einem der Ansprüche 11 bis 13, wobei,
wenn die Kommunikation basierend auf dem ersten Anruf die Datenkommunikation ist, das Einstellen der Genehmigung für den zweiten eingehenden Anruf des Sprachanrufs angefordert wird, und
der zweite eingehende Anruf des Sprachanrufs genehmigt wird.

15. Kommunikationssystem nach einem der Ansprüche 11 bis 14, wobei,
wenn der Sprachtelefonanruf basierend auf dem ersten Anruf eingerichtet ist, das Netzwerkgerät aufgefordert wird, die Genehmigung für den zweiten eingehenden Anruf des Sprachanrufs einzustellen, und
der zweite eingehende Anruf durch das Netzwerkgerät genehmigt wird, um gleichzeitige Anrufe durch die ersten und zweiten Schnittstelleneinheiten mit einer Mehrzahl von den Kommunikationsgeräten zu einer Mehrzahl von Kommunikationszielen zu ermöglichen, wobei die gleichzeitigen Anrufe durch Umschalten jeder Stimme ausgeführt werden.

16. Computerlesbares Aufzeichnungsmedium, das ein Kommunikationsprogramm speichert, das Code-Einrichtungen enthält, um die Schritte eines Kommunikationsverfahrens auszuführen, wenn es auf einem Computer ausgeführt wird, wobei das Kommunikationsverfahren zum kabellosen Verbinden einer Mehrzahl von Netzwerken mit einem Kommunikationsgerät verwendet wird, um eine(n) Anrufübertragung/-empfang zwischen dem Kommunikationsgerät und den Netzwerken auszuführen, wobei das Kommunikationsverfahren enthält:
Anfordern eines ersten Anrufs für ein anderes Kommunikationsgerät von einer ersten Schnittstelleneinheit in dem Kommunikationsgerät und kabelloses Verbinden eines Netzwerks mit der ersten Schnittstelleneinheit; und
Auffordern eines Netzwerkgeräts in den Netzwerken, um eine Genehmigung oder Nichtgenehmigung in Abhängigkeit davon einzustellen, ob der erste Anruf ein Sprachanruf oder ein Datenanruf ist, und eine Genehmigung oder Nichtgenehmigung eines zweiten eingehenden Anrufs für eine zweite Schnittstelleneinheit in dem Kommunikationsgerät basierend auf der Einstellung einzustellen, die von dem Sprachanruf oder dem Datenanruf abhängt, wenn der erste Anruf für das andere Kommunikationsgerät angefordert wurde, wobei der erste Anruf entweder ein Sprachanruf von einem Sprachtelefonanruf oder ein Datenanruf von einer Datenkommunikation ist und der zweite eingehende Anruf entweder ein Sprachanruf von einem Sprachtelefonanruf oder ein Datenanruf von einer Datenkommunikation ist,
wobei der zweite eingehende Anruf gesteuert wird, um von dem Netzwerkgerät genehmigt oder nicht genehmigt zu werden, das die Genehmigung oder Nichtgenehmigung des zweiten eingehenden Anrufs abhängig von dem Sprachanruf oder dem Datenanruf des zweiten eingehenden Anrufs einstellt, während der Sprachtelefonanruf oder die Datenkommunikation aufrecht erhalten wird, der/die basierend auf dem ersten Anruf eingerichtet wurde.

## Revendications

1. Dispositif de communication (4) connecté par voie hertzienne à une pluralité de réseaux (6, 8), configuré de manière à permettre une émission/réception d'appels à travers les réseaux, comprenant :
des première et seconde unités d'interface (CI, WI) correspondant aux réseaux ; et **caractérisé par** :
une unité de commande (42) configurée de manière à, lorsqu'un premier appel (X) pour un autre dispositif de communication (401, 402) est demandé à partir de la première unité d'interface, demander à un dispositif de réseau (10, 14) au sein des réseaux de définir une permission ou non permission selon que le premier appel est un appel vocal ou un appel de données, et de définir une permission ou non-permission d'un second appel entrant pour la seconde unité d'interface sur la base du fait que ladite définition dépend de l'appel vocal ou de l'appel de données, le premier appel étant soit un appel vocal d'un appel téléphonique vocal, soit un appel de données de communication de données, et le second appel entrant étant soit un appel vocal d'un appel téléphonique vocal, soit un appel de données de communication de données ;
dans lequel l'unité de commande est exploitable de manière à demander au dispositif de réseau de définir la permission ou la non-permission du second appel entrant en fonction de l'appel vocal ou de l'appel de données du second appel entrant, tout en conservant l'appel téléphonique vocal ou la communication de données établi(e) sur la base du premier appel.

2. Dispositif de communication selon la revendication 1, dans lequel
l'unité de commande est configurée de manière à demander une définition de permission pour le second appel entrant, lequel est d'un type différent du premier appel ; et
le second appel entrant du type différent est permis.

3. Dispositif de communication selon la revendication 1 ou 2, dans lequel
lorsque la communication basée sur le premier appel est l'appel téléphonique vocal, l'unité de commande est configurée de manière à demander la définition de permission pour le second appel entrant de l'appel de données ; et
le second appel entrant de l'appel de données est permis.

4. Dispositif de communication selon la revendication 1, 2 ou 3, dans lequel
lorsque la communication basée sur le premier appel est la communication de données, l'unité de commande est configurée de manière à demander la définition de permission pour le second appel entrant de l'appel vocal ; et
le second appel entrant de l'appel vocal est permis.

5. Dispositif de communication selon l'une quelconque des revendications 1 à 4, dans lequel,
lorsque l'appel téléphonique vocal est établi sur la base du premier appel, l'unité de commande est configurée de manière à demander au dispositif de réseau de définir la permission pour le second appel entrant de l'appel vocal ; et
le second appel entrant est permis par le dispositif de réseau en vue de permettre des appels simultanés, à travers les première et seconde unités d'interface, avec une pluralité de dispositifs de communication au niveau d'une pluralité de destinations de communication, les appels simultanés étant mis en oeuvre en commutant chaque voix.

6. Système de communication incluant une pluralité de réseaux et un dispositif de communication, connecté par voie hertzienne aux réseaux, configuré de manière à permettre une émission/réception d'appels à travers les réseaux ;
dans lequel le dispositif de communication présente des première et seconde unités d'interface correspondant aux réseaux, et est **caractérisé par** une unité de commande configurée de manière à, lorsqu'un premier appel pour un autre dispositif de communication est demandé à partir de la première unité d'interface, demander à un dispositif de réseau au sein des réseaux de définir une permission ou non permission selon que le premier appel est un appel vocal ou un appel de données, et de définir une permission ou non-permission d'un second appel entrant pour la seconde unité d'interface sur la base du fait que ladite définition dépend de l'appel vocal ou de l'appel de données, le premier appel étant soit un appel vocal d'un appel téléphonique vocal, soit un appel de données de communication de données, et le second appel entrant étant soit un appel vocal d'un appel téléphonique vocal, soit un appel de données de communication de données ; et
dans lequel l'unité de commande est exploitable de manière à demander au dispositif de réseau de définir la permission ou la non-permission du second appel entrant en fonction de l'appel vocal ou de l'appel de données du second appel entrant, tout en conservant l'appel téléphonique vocal ou la communication de données établi(e) sur la base du premier appel.

7. Système de communication selon la revendication 6, dans lequel
le dispositif de communication est configuré de manière à demander la définition de permission pour le second appel entrant, lequel est d'un type différent du premier appel ; et
le second appel entrant du type différent est permis.

8. Système de communication selon la revendication 6 ou 7, dans lequel
lorsque la communication basée sur le premier appel représente l'appel téléphonique vocal, le dispositif de communication est configuré de manière à demander la définition de permission pour le second appel entrant de l'appel de données ; et
le second appel entrant de l'appel de données est permis.

9. Système de communication selon la revendication 6, 7 ou 8, dans lequel
lorsque la communication basée sur le premier appel représente la communication de données, le dispositif de communication est configuré de manière à demander la définition de permission pour le second appel entrant de l'appel vocal; et
le second appel entrant de l'appel vocal est permis.

10. Système de communication selon l'une quelconque des revendications 6 à 9, dans lequel
lorsque l'appel téléphonique vocal est établi sur la base du premier appel, le dispositif de communication est configuré de manière à demander au dispositif de réseau de définir la permission pour le second appel entrant de l'appel vocal ; et
le second appel entrant est permis par le dispositif de réseau en vue de permettre des appels simultanés, à travers les première et seconde unités d'interface, avec une pluralité de dispositifs de communication au niveau d'une pluralité de destinations de communication, les appels simultanés étant mis en oeuvre en commutant chaque voix.

11. Procédé de communication utilisé pour connecter par voie hertzienne une pluralité de réseaux avec un dispositif de communication, en vue de mettre en oeuvre une émission/réception d'appels entre le dispositif de communication et les réseaux, le procédé consistant à :
demander un premier appel pour un autre dispositif de communication, à partir d'une première unité d'interface dans le dispositif de communication, et connecter par voie hertzienne un réseau avec la première unité d'interface ; et
demander à un dispositif de réseau au sein des réseaux de définir une permission ou non permission selon que le premier appel est un appel vocal ou un appel de données, et définir une permission ou non-permission d'un second appel entrant pour une seconde unité d'interface dans le dispositif de communication sur la base du fait que ladite définition dépend de l'appel vocal ou de l'appel de données, lorsque le premier appel pour ledit autre dispositif de communication est demandé, le premier appel étant soit un appel vocal d'un appel téléphonique vocal, soit un appel de données de communication de données, et le second appel entrant étant soit un appel vocal d'un appel téléphonique vocal, soit un appel de données de communication de données;
dans lequel le second appel entrant est commandé de manière à être permis ou non permis par le dispositif de réseau qui définit la permission ou la non-permission du second appel entrant en fonction de l'appel vocal ou de l'appel de données du second appel entrant, tout en maintenant l'appel téléphonique vocal ou la communication de données établi(e) sur la base du premier appel.

12. Procédé de communication selon la revendication 11, dans lequel
la définition de permission pour le second appel entrant, lequel est d'un type différent du premier appel, est demandée, et le second appel entrant de type différent est permis.

13. Procédé de communication selon la revendication 11 ou 12, dans lequel
lorsque la communication basée sur le premier appel représente l'appel téléphonique vocal, la définition de permission pour le second appel entrant de l'appel de données est demandée ; et
le second appel entrant de l'appel de données est permis.

14. Procédé de communication selon l'une quelconque des revendications 11 à 13, dans lequel,
lorsque la communication basée sur le premier appel représente la communication de données, la définition de permission pour le second appel entrant de l'appel vocal est demandée ; et
le second appel entrant de l'appel vocal est permis.

15. Procédé de communication selon l'une quelconque des revendications 11 à 14, dans lequel,
lorsque l'appel téléphonique vocal est établi sur la base du premier appel, le dispositif de réseau est invité à définir une permission pour le second appel entrant de l'appel vocal ; et
le second appel entrant est permis par le dispositif de réseau, en vue de permettre des appels simultanés à travers les première et seconde unités d'interface avec une pluralité des dispositifs de communication au niveau d'une pluralité de destinations de communication, les appels simultanés étant mis en oeuvre en commutant chaque voix.

16. Support d'enregistrement lisible par ordinateur stockant un programme de communication comprenant un moyen de code apte à mettre en oeuvre les étapes d'un procédé de communication, lorsqu'il est exécuté sur un ordinateur, le programme de communication étant utilisé en vue de connecter par voie hertzienne une pluralité de réseaux avec un dispositif de communication, en vue de mettre en oeuvre une émission/réception d'appels entre le dispositif de communication et les réseaux, le procédé de communication consistant à :
demander un premier appel pour un autre dispositif de communication, à partir d'une première unité d'interface dans le dispositif de communication, et connecter par voie hertzienne un réseau avec la première unité d'interface ; et
demander à un dispositif de réseau au sein des réseaux de définir une permission ou non permission selon que le premier appel est un appel vocal ou un appel de données, et définir une permission ou non-permission d'un second appel entrant pour une seconde unité d'interface dans le dispositif de communication sur la base du fait que ladite définition dépend de l'appel vocal ou de l'appel de données, lorsque le premier appel pour ledit autre dispositif de communication est demandé, le premier appel étant soit un appel vocal d'un appel téléphonique vocal, soit un appel de données de communication de données, et le second appel entrant étant soit un appel vocal d'un appel téléphonique vocal, soit un appel de données de communication de données ;
dans lequel le second appel entrant est commandé de manière à être permis ou non permis par le dispositif de réseau qui définit la permission ou la non-permission du second appel entrant en fonction de l'appel vocal ou de l'appel de données du second appel entrant, tout en maintenant l'appel téléphonique vocal ou la communication de données établi(e) sur la base du premier appel.
